# EUROPEAN PATENT APPLICATION

(11) **EP 4 738 939 A1**
(43) Date of publication of application: **06.05.2026**
(21) Application number: 23943056.4
(22) Date of filing: 30.06.2023
(51) Int. Cl.: H04W 52/02

(54) **COMMUNICATION PROCESSING METHOD, TERMINAL, AND NETWORK DEVICE**

(71) Applicant: Beijing Xiaomi Mobile Software Co., Ltd., Beijing 100085 (CN)
(72) Inventor: GUO, Shengxiang, Beijing 100085 (CN); FU, Ting, Beijing 100085 (CN); LI, Yanhua, Beijing 100085 (CN); HU, Ziquan, Beijing 100085 (CN)
(74) Representative: Stöckeler, Ferdinand
(86) International application number: PCT/CN2023/105447
(87) International publication number: WO 2025/000567

(57) **Abstract**

The present disclosure relates to a communication processing method, a terminal, and a network device. The method comprises: a network device sending a low-power wake-up signal (LPWUS) configuration to a terminal; the terminal acquiring the LPWUS configuration; the network device sending an LPWUS to the terminal; and according to the LPWUS configuration, the terminal controlling a low-power wake-up receiver (LPWUR) to receive at least one LPWUS, and adjusting the operation state of main radio (MR) according to the LPWUS. An LPWUS configuration is configured for a terminal, and the terminal receives an LPWUS, thereby effectively reducing energy consumption.

## Description

### TECHNICAL FIELD

The disclosure relates to the field of communication technologies, and in particular to a communication processing method, a terminal, and a network device.

### BACKGROUND

In wireless communication, a terminal may receive signals via main radio (MR). The MR consumes power at different rates in different states.

### SUMMARY

Embodiments of the disclosure provide a communication processing method, a terminal, and a network device, capable of reducing consumption during a communication procedure.

According to embodiments of a first aspect of the disclosure, a communication processing method is provided. The method includes: acquiring a low-power wake-up signal (LP WUS) configuration; controlling a low-power wake-up receiver (LP WUR) of a terminal to receive at least one LP WUS based on the LP WUS configuration, and determining an operation state of main radio (MR) of the terminal based on the at least one LP WUS.

In embodiments of the present disclosure, with receiving the LP WUS configuration, reception of the LP WUS may be achieved, and energy consumption of the terminal may be effectively reduced.

According to embodiments of a second aspect of the disclosure, a communication processing method is provided. The method includes: sending an LP WUS configuration to a terminal; and sending an LP WUS to the terminal.

According to embodiments of a third aspect of the disclosure, a communication processing method is provided. The method includes: sending, by a network device, an LP WUS configuration to a terminal; acquiring, by the terminal, the LP WUS configuration; and sending, by the network device, at least one LP WUS to the terminal; controlling, by the terminal, a LP WUR to receive the at least one LP WUS based on the LP WUS configuration, and adjusting, by the terminal, an operation state of MR of the terminal based on the at least one LP WUS.

According to embodiments of a fourth aspect of the disclosure, a terminal is provided. The terminal includes: a transceiver module, configured to acquire an LP WUS configuration; and a processing module, configured to control a LP WUR of the terminal to receive at least one LP WUS based on the LP WUS configuration, and determine an operation state of MR based on the at least one LP WUS.

According to embodiments of a fifth aspect of the disclosure, an access network device is provided. The access network device includes: a transceiver module, configured to send an LP WUS configuration to a terminal; and a processing module, configured to send an LP WUS to the terminal.

According to embodiments of a sixth aspect of the disclosure, a terminal is provided. The terminal includes: one or more processors, in which the terminal is configured to implement any one of the methods described in the first aspect.

According to embodiments of a seventh aspect of the disclosure, a network device is provided. The network device includes: one or more processors, in which the network device is configured to implement any one of the methods described in the second aspect.

According to embodiments of a ninth aspect of the disclosure, a communication system is provided. The communication system includes: a terminal and a network device, in which the terminal is configured to perform any one of the methods described in the first aspect, and the network device is configured to perform any one of the methods described in the second aspect.

According to embodiments of a tenth aspect of the disclosure, a storage medium is provided. The storage medium stores instructions that, when running on a communication device, cause the communication device to implement the method described in any of the second aspect or the second aspect.

### BRIEF DESCRIPTION OF THE DRAWINGS

In order to more clearly illustrate technical solutions in embodiments of the disclosure, the accompanying drawings required for describing the embodiments are introduced below. The following accompanying drawings are merely some embodiments of the disclosure and do not specifically limit the scope of protection of the disclosure.
FIG. 1 is a schematic diagram illustrating an architecture of a communication system according to an embodiment of the disclosure.
FIG. 2 is a schematic diagram illustrating an interaction of a communication processing method according to an embodiment of the disclosure.
FIG. 3A is a flowchart illustrating a communication processing method according to an embodiment of the disclosure.
FIG. 3B is a flowchart illustrating a communication processing method according to an embodiment of the disclosure.
FIG. 3C is a flowchart illustrating a communication processing method according to an embodiment of the disclosure.
FIG. 4A is a flowchart illustrating a communication processing method according to an embodiment of the disclosure.
FIG. 4B is a flowchart illustrating a communication processing method according to an embodiment of the disclosure.
FIG. 5 is a schematic diagram illustrating a communication processing method according to an embodiment of the disclosure.
FIG. 6A is a schematic diagram illustrating an LP WUS configuration according to an embodiment of the disclosure.
FIG. 6B is a schematic diagram illustrating an LP WUS configuration according to an embodiment of the disclosure.
FIG. 6C is a schematic diagram illustrating an LP WUS configuration according to an embodiment of the disclosure.
FIG. 6D is a schematic diagram illustrating an LP WUS configuration according to an embodiment of the disclosure.
FIG. 6E is a schematic diagram illustrating an LP WUS configuration according to an embodiment of the disclosure.
FIG. 6F is a schematic diagram illustrating an LP WUS configuration according to an embodiment of the disclosure.
FIG. 6G is a schematic diagram illustrating an LP WUS configuration according to an embodiment of the disclosure.
FIG. 6H is a schematic diagram illustrating an LP WUS configuration according to an embodiment of the disclosure.
FIG. 6I is a schematic diagram illustrating an LP WUS configuration according to an embodiment of the disclosure.
FIG. 6J is a schematic diagram illustrating an LP WUS configuration according to an embodiment of the disclosure.
FIG. 6K is a schematic diagram illustrating an LP WUS configuration according to an embodiment of the disclosure.
FIG. 6L is a schematic diagram illustrating an LP WUS configuration according to an embodiment of the disclosure.
FIG. 6M is a schematic diagram illustrating an LP WUS configuration according to an embodiment of the disclosure.
FIG. 6N is a schematic diagram illustrating an LP WUS configuration according to an embodiment of the disclosure.
FIG. 6O is a schematic diagram illustrating an LP WUS configuration according to an embodiment of the disclosure.
FIG. 6P is a schematic diagram illustrating an LP WUS configuration according to an embodiment of the disclosure.
FIG. 6Q is a schematic diagram illustrating an LP WUS configuration according to an embodiment of the disclosure.
FIG. 6R is a schematic diagram illustrating an LP WUS configuration according to an embodiment of the disclosure.
FIG. 6S is a schematic diagram illustrating an LP WUS configuration according to an embodiment of the disclosure.
FIG. 6T is a schematic diagram illustrating an LP WUS configuration according to an embodiment of the disclosure.
FIG. 6U is a schematic diagram illustrating an LP WUS configuration according to an embodiment of the disclosure.
FIG. 6V is a schematic diagram illustrating an LP WUS configuration according to an embodiment of the disclosure.
FIG. 6W is a schematic diagram illustrating an LP WUS configuration according to an embodiment of the disclosure.
FIG. 6X is a schematic diagram illustrating an LP WUS configuration according to an embodiment of the disclosure.
FIG. 7A is a block diagram illustrating a terminal according to an embodiment of the disclosure.
FIG. 7B is a block diagram illustrating an access network device according to an embodiment of the disclosure.
FIG. 7C is a block diagram illustrating a core network device according to an embodiment of the disclosure.
FIG. 8A is a block diagram illustrating a communication device 8100 according to an embodiment of the disclosure.
FIG. 8B is a block diagram illustrating a chip 8200 according to an embodiment of the disclosure.

### DETAILED DESCRIPTION

Embodiments of the disclosure provide a communication processing method, a terminal, and a network device.

In a first aspect, embodiments of the disclosure provide a communication processing method. The method includes: acquiring a low-power wake-up signal (LP WUS) configuration; controlling a low-power wake-up receiver (LP WUR) of a terminal to receive at least one LP WUS based on the LP WUS configuration, and determining an operation state of main radio (MR) of the terminal based on the at least one LP WUS.

In embodiments of the present disclosure, with receiving the LP WUS configuration, reception of the LP WUS may be achieved, and energy consumption of the terminal may be effectively reduced.

In combination with embodiments of the first aspect, in some embodiments, acquiring the LP WUS configuration includes: receiving a configuration signal sent from a network device, and determining the LP WUS configuration based on the configuration signal; or acquiring a part or all of LP WUS configurations configured by a network device.

In combination with embodiments of the first aspect, in some embodiments, the configuration signal includes at least one of: a radio resource control (RRC) signaling; a media-access-control control element (MAC CE); or a dynamic indication signaling.

In combination with embodiments of the first aspect, in some embodiments, the LP WUS configuration includes at least one of:
an LP WUS period;
an LP WUS period offset, in which the LP WUS period offset is one or more of: a radio frame offset of an LP WUS period, a slot offset of an LP WUS period, or a time domain symbol offset of an LP WUS period;
an LP WUS period length, in which the LP WUS period length is a time domain length of an LP WUS period;
a numerical count of LP WUS sending/monitoring occasions within an LP WUS period;
a maximum numerical count and/or a minimum numerical count of LP WUS sending/monitoring occasions within an LP WUS period;
a gap between adjacent LP WUS sending/monitoring occasions within an LP WUS period, in which the gap between adjacent LP WUS sending/monitoring occasions includes a time domain gap and/or a frequency domain gap;
an LP WUS sending/monitoring occasion;
an LP WUS sending/monitoring occasion length;
an LP WUS sending/monitoring occasion offset;
a gap between adjacent LP WUSs within an LP WUS sending /monitoring occasion, in which the gap between adjacent LP WUSs includes a time domain gap and/or a frequency domain gap;
a numerical count of LP WUSs in an LP WUS sending/monitoring occasion;
a maximum numerical count of LP WUSs in an LP WUS sending/monitoring occasion;
a minimum numerical count of LP WUSs in an LP WUS sending/monitoring occasion;
a sending buffer size;
a cycle buffer size;
an LP WUS sending length, that is, a time domain length of a whole LP WUS, the whole LP WUS includes or does not include a preamble code/a reference domain/a reference signal, and the LP WUS sending length is less than or equal to an LP WUS sending occasion length;
a numerical count of LP WUSs consecutively sent;
a maximum numerical count of LP WUSs consecutively sent;
a minimum numerical count of LP WUSs consecutively sent;
a LP WUR on-timer length;
a LP WUR off-timer length;
an offset length between time information of sending an LP WUS and time information of a discontinuous reception (DRX) period;
an offset length between time information of sending an LP WUS and time information of a DRX activation duration;
an offset length between time information of sending an LP WUS and time information of a DRX inactivation duration;
an offset length between time information of sending an LP WUS and time information of a first signal;
an offset length between time information of an LP WUS sending/monitoring occasion and time information of a DRX period;
an offset length between time information of an LP WUS sending/monitoring occasion and time information of a DRX activation duration;
an offset length between time information of an LP WUS sending/monitoring occasion and time information of a DRX inactivation duration;
an offset length between time information of an LP WUS sending/monitoring occasion and time information of a first signal;
an offset length between time information of an LP WUS period and time information of a DRX period;
an offset length between time information of an LP WUS period and time information of a DRX activation duration;
an offset length between time information of an LP WUS period and time information of a DRX inactivation duration; or
an offset length between time information of an LP WUS period and time information of a first signal.

In combination with embodiments of the first aspect, in some embodiments, the first signal includes at least one of: downlink control information (DCI) with cyclic redundancy check (CRC) scrambled by power saving-radio network temporary identity (PS-RNTI) (DCP), a paging early indication (PEI); or a WUS.

In combination with embodiments of the first aspect, in some embodiments, the time information includes at least one of: a starting point, an ending point, a starting point at m/2n, or an ending point at m/2n;
in which m and n are positive integers, the starting point includes a first time domain symbol, a first slot, a first radio frame or a first sub-radio frame of a time domain resource corresponding to a channel/signal, and the ending point includes a last time domain symbol, a last slot, a last radio frame or a last sub-radio frame of the time domain resource corresponding to the channel/signal.

In combination with embodiments of the first aspect, in some embodiments, controlling the LP WUR of the terminal to receive the at least one LP WUS based on the LP WUS configuration includes at least one of:
turning on the LP WUR at an LP WUS sending/monitoring occasion;
determining a start time of the LP WUR based on a sending buffer size, an LP WUS sending/ monitoring occasion and the sending buffer size;
determining a start time of the LP WUR based on an LP WUS sending/ monitoring occasion and a sending buffer size;
determining a start time of the LP WUR based on a sending buffer size and an LP WUS sending/ monitoring occasion;
turning on the LP WUR during a LP WUR on-timer length; or
turning off the LP WUR during a LP WUR off-timer length.

In combination with embodiments of the first aspect, in some embodiments, adjusting the operation state of the MR based on the at least one LP WUS includes at least one of:
in a case where the at least one LP WUS does not indicate to wake up, turning off the MR in a subsequent DRX on duration;
in a case where the at least one LP WUS does not indicate to wake up, turning off the MR in a subsequent duration;
in a case where the at least one LP WUS indicates to wake up, turning on the MR; or
in a case where the at least one LP WUS does not indicate to wake up, not monitoring a first signal.

In combination with embodiments of the first aspect, in some embodiments, the method further includes at least one of:
in a case where the at least one LP WUS is not received, not turning on the MR in a subsequent DRX on duration;
in a case where the at least one LP WUS is not received, turning off the MR in a subsequent duration; or
in a case where the at least one LP WUS is not received, not monitoring a first signal.

In combination with embodiments of the first aspect, in some embodiments, the method further includes reporting a terminal capability to a network device.

In combination with embodiments of the first aspect, in some embodiments, the terminal capability includes a minimum value or a maximum value of a first offset.

In combination with embodiments of the first aspect, in some embodiments, the first offset includes at least one of:
an LP WUS period offset;
an LP WUS sending/monitoring occasion offset;
an offset between time information of sending an LP WUS and time information of a DRX period;
an offset between time information of sending an LP WUS and time information of a DRX activation duration;
an offset between time information of sending an LP WUS and time information of a DRX inactivation duration;
an offset between time information of sending an LP WUS and time information of a first signal;
an offset between time information of an LP WUS sending/monitoring occasion and time information of a DRX period;
an offset between time information of an LP WUS sending/monitoring occasion and time information of a DRX activation duration;
an offset between time information of an LP WUS sending/monitoring occasion and time information of a DRX inactivation duration;
an offset between time information of an LP WUS sending/monitoring occasion and time information of a first signal;
an offset between time information of an LP WUS period and time information of a DRX period;
an offset between time information of an LP WUS period and time information of a DRX activation duration;
an offset between time information of an LP WUS period and time information of a DRX inactivation duration; or
an offset between time information of an LP WUS period and time information of a first signal.

In a second aspect, embodiments of the disclosure provide a communication processing method. The method includes: sending an LP WUS configuration to a terminal; and sending an LP WUS to the terminal.

In combination with embodiments of the second aspect, in some embodiments, the LP WUS configuration includes: sending a configuration signal to the terminal, in which the configuration signal includes the LP WUS configuration.

In combination with embodiments of the second aspect, in some embodiments, the configuration signal includes at least one of: an RRC signaling; a MAC CE; or a dynamic indication signaling.

In combination with embodiments of the second aspect, in some embodiments, the LP WUS configuration includes at least one of:
an LP WUS period;
an LP WUS period offset, in which the LP WUS period offset is one or more of: a radio frame offset of an LP WUS period, a slot offset of an LP WUS period, or a time domain symbol offset of an LP WUS period;
an LP WUS period length, in which the LP WUS period length is a time domain length of an LP WUS period;
a numerical count of LP WUS sending/monitoring occasions within an LP WUS period;
a maximum numerical count and/or a minimum numerical count of LP WUS sending/monitoring occasions within an LP WUS period;
a gap between adjacent LP WUS sending/monitoring occasions within an LP WUS period, in which the gap between adjacent LP WUS sending/monitoring occasions includes a time domain gap and/or a frequency domain gap;
an LP WUS sending/monitoring occasion;
an LP WUS sending/monitoring occasion length;
an LP WUS sending/monitoring occasion offset;
a gap between adjacent LP WUSs within an LP WUS sending /monitoring occasion, in which the gap between adjacent LP WUSs includes a time domain gap and/or a frequency domain gap;
a numerical count of LP WUSs in an LP WUS sending/monitoring occasion;
a maximum numerical count of LP WUSs in an LP WUS sending/monitoring occasion;
a minimum numerical count of LP WUSs in an LP WUS sending/monitoring occasion;
a sending buffer size;
a cycle buffer size;
an LP WUS sending length, that is, a time domain length of a whole LP WUS, the whole LP WUS includes or does not include a preamble code/a reference domain/a reference signal, and the LP WUS sending length is less than or equal to an LP WUS sending occasion length;
a numerical count of LP WUSs consecutively sent;
a maximum numerical count of LP WUSs consecutively sent;
a minimum numerical count of LP WUSs consecutively sent;
a LP WUR on-timer length;
a LP WUR off-timer length;
an offset length between time information of sending an LP WUS and time information of a discontinuous reception (DRX) period;
an offset length between time information of sending an LP WUS and time information of a DRX activation duration;
an offset length between time information of sending an LP WUS and time information of a DRX inactivation duration;
an offset length between time information of sending an LP WUS and time information of a first signal;
an offset length between time information of an LP WUS sending/monitoring occasion and time information of a DRX period;
an offset length between time information of an LP WUS sending/monitoring occasion and time information of a DRX activation duration;
an offset length between time information of an LP WUS sending/monitoring occasion and time information of a DRX inactivation duration;
an offset length between time information of an LP WUS sending/monitoring occasion and time information of a first signal;
an offset length between time information of an LP WUS period and time information of a DRX period;
an offset length between time information of an LP WUS period and time information of a DRX activation duration;
an offset length between time information of an LP WUS period and time information of a DRX inactivation duration; or
an offset length between time information of an LP WUS period and time information of a first signal.

In combination with embodiments of the second aspect, in some embodiments, the first signal includes at least one of: DCP, a PEI; or a WUS.

In combination with embodiments of the second aspect, in some embodiments, the time information includes at least one of: a starting point, an ending point, a starting point at m/2n, or an ending point at m/2n;

in which m and n are positive integers, the starting point includes a first time domain symbol, a first slot, a first radio frame or a first sub-radio frame of a time domain resource corresponding to a channel/signal, and the ending point includes a last time domain symbol, a last slot, a last radio frame or a last sub-radio frame of the time domain resource corresponding to the channel/signal.

In combination with embodiments of the second aspect, in some embodiments, the method further includes: receiving a terminal capability reported by the terminal; determining the LP WUS configuration based on the terminal capability.

In combination with embodiments of the second aspect, in some embodiments, the terminal capability includes a minimum value or a maximum value of a first offset.

In combination with embodiments of the second aspect, in some embodiments, the first offset includes at least one of:
an LP WUS period offset;
an LP WUS sending/monitoring occasion offset;
an offset between time information of sending an LP WUS and time information of a DRX period;
an offset between time information of sending an LP WUS and time information of a DRX activation duration;
an offset between time information of sending an LP WUS and time information of a DRX inactivation duration;
an offset between time information of sending an LP WUS and time information of a first signal;
an offset between time information of an LP WUS sending/monitoring occasion and time information of a DRX period;
an offset between time information of an LP WUS sending/monitoring occasion and time information of a DRX activation duration;
an offset between time information of an LP WUS sending/monitoring occasion and time information of a DRX inactivation duration;
an offset between time information of an LP WUS sending/monitoring occasion and time information of a first signal;
an offset between time information of an LP WUS period and time information of a DRX period;
an offset between time information of an LP WUS period and time information of a DRX activation duration;
an offset between time information of an LP WUS period and time information of a DRX inactivation duration; or
an offset between time information of an LP WUS period and time information of a first signal.

In combination with embodiments of the second aspect, in some embodiments, the first offset in the LP WUS configuration is not greater than the maximum value of the first offset, or the first offset in the LP WUS configuration is not less than the minimum value of the first offset.

In combination with embodiments of the second aspect, in some embodiments, the network device is an access network device, or a core network device.

In a third aspect, embodiments of the present disclosure provide a communication processing method. The method includes: sending, by a network device, an LP WUS configuration to a terminal; acquiring, by the terminal, the LP WUS configuration; and sending, by the network device, at least one LP WUS to the terminal. controlling, by the terminal, a LP WUR to receive the at least one LP WUS based on the LP WUS configuration, and adjusting, by the terminal, an operation state of MR of the terminal based on the at least one LP WUS.

In a fourth aspect, embodiments of the disclosure provide a terminal. The terminal includes at least one of a transceiver module or a processing module. The terminal is configured to implement optional implementations of the first aspect or the third aspect.

In a fifth aspect, embodiments of the disclosure provide a network device. The network device includes at least one of a transceiver module or a processing module. The network device is configured to implement optional implementations of the second aspect or the third aspect.

In a sixth aspect, embodiments of the disclosure provide a terminal. The terminal includes: one or more processors, in which the terminal is configured to implement optional implementations of the first aspect or the fourth aspect.

In a seventh aspect, embodiments of the disclosure provide a network device. The network device includes: one or more processors, in which the network device is configured to implement optional implementations of the second aspect or the fourth aspect.

In an eighth aspect, embodiments of the disclosure provide a communication system. The communication system includes: a terminal and a network device. The terminal is configured to perform the method as described in optional implementations of the first aspect or the third aspect, and the network device is configured to perform the method as described in optional implementations of the second aspect, or the third aspect.

In a ninth aspect, embodiments of the disclosure provide a storage medium. The storage medium stores instructions that, when running on a communication device, cause the communication device to implement the method as described in optional implementations of the first aspect, the second aspect or the third aspect.

In a tenth aspect, the embodiments of the disclosure provide a program product. When the program product is executed by a communication device, the communication device is caused to implement the method as described in optional implementations of the first aspect, the second aspect or the third aspect.

In an eleventh aspect, the embodiments of the disclosure provide a computer program. When the computer program is running on a computer, the computer is caused to implement the methods as described in optional implementations of the first aspect, the second aspect or the third aspect.

In a twelfth aspect, embodiments of the disclosure provide a chip or a chip system. The chip or the chip system includes a processing circuitry configured to implement the method as described in optional implementations of the first aspect, the second aspect or the third aspect.

It may be understood that the terminal, the network device, the communication system, the storage medium, the program product, the computer program and the chip or a chip system are all used to implement the method in the embodiments of the disclosure. Thus, regarding beneficial effects they may achieve, reference may made be to the beneficial effects in the corresponding methods, which may not be repeated herein.

The embodiments of the disclosure provide a communication processing method, a terminal, and a network device. In some embodiments, terms such as "communication processing method", "information processing method" and "communication method" may be used interchangeably, terms such as "communication processing apparatus", "information processing apparatus", and "communication apparatus" may be used interchangeably, and terms such as "information processing system" and "communication system" may be used interchangeably.

The embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the disclosure, unless otherwise specified or there is a logical conflict, the terms and/or descriptions among the embodiments are consistent and may refer to each other, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one selected from A and B for execution (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (Ais executed independently of B); in some embodiments, B (B is executed independently of A); in some embodiments, one selected from A and B for execution (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "comprising A", "including A", "used to indicate A", and "carrying A" may be interpreted as directly carrying A or indirectly indicating A.

In some embodiments, the terms such as "in response to...", "in response to determining...", "in the case of/that...", "when", "upon...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus and the device may be interpreted as physical or virtual, and their names are not limited to the names recorded in the embodiments. In some cases, the apparatus and the device may also be understood as "equipment", "device", "circuit", "network element", "node", "function", "unit", "section", "system", "network", "chip", "chip system", "entity", and "subject".

In some embodiments, the term such as "network" may be interpreted as an apparatus (e.g., a network device, an access network device, a core network device, etc.) included in the network.

In some embodiments, "access network device (AN device)" may be referred to as "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "BWP" and the like.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, the acquisition of data, information, etc. may comply with the laws and regulations of the country where the data is acquired.

In some embodiments, data, information, etc. may be acquired with the consent from users.

In addition, each element, each row, or each column in the table of the embodiments of the disclosure may be implemented as an independent embodiment, and the combination of any elements, any rows, or any columns may also be implemented as an independent embodiment.

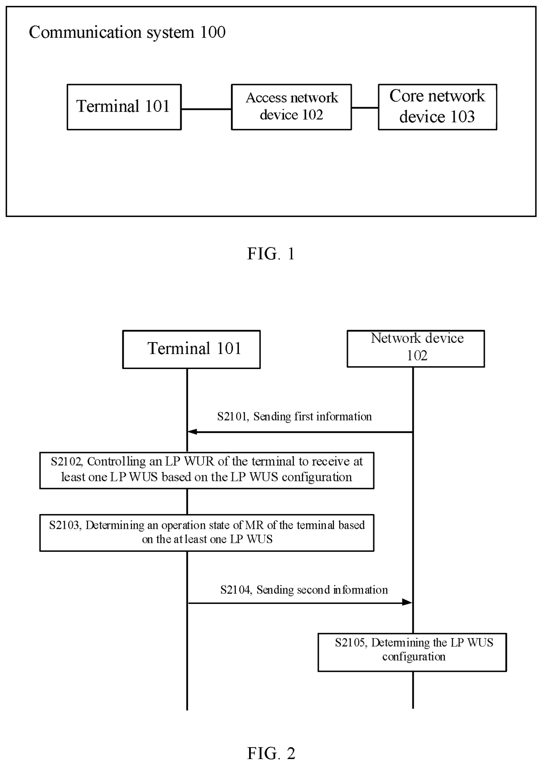

FIG. 1 is a schematic diagram illustrating an architecture of a communication system according to an embodiment of the disclosure. As shown in FIG. 1, the communication system 100 may include a terminal 101, an access network device 102 and a core network device 103. The access network device 102 and the core network device 103 belong to a network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device 102 may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited herein.

In some embodiments, the technical solution of the disclosure may be applicable to an Open RAN architecture. In this case, the interfaces between or within the access network devices involved in the embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device 103 may be one device, or may be a plurality of devices or a group of devices, including all or part of a first network element 1031, a second network element 1032, etc. The network element may be virtual or physical. The core network may include, for example, at least one of an evolved packet core (EPC), a 5G core network (5GCN), or a next generation core (NGC).

It may be understood that the communication system described in the embodiments of the disclosure aims to more clearly illustrate the technical solution of the embodiments of the disclosure, and does not constitute a limitation on the technical solution proposed in the embodiments of the disclosure. A person skilled in the art may know that with the evolution of the system architecture and the emergence of new service scenarios, the technical solution proposed in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects other than those shown in FIG. 1. The number and form of the subjects are arbitrary. The subjects may be physical or virtual. The connection relationship between the subjects is an example. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In an embodiment of the present disclosure, an LP WUS is introduced into the communication standard. The LP WUS is received using a separate receiver, which is called as a low-power wake-up radio (LP WUR). The terminal needs to use MR to process downlink and/or uplink data normally.

In a possible embodiment, when the terminal receives a WUS and the WUS indicates to wake up, the terminal may turn on the MR to receive and process downlink and/or uplink signals.

In a possible embodiment, in a case where the terminal does not receive a WUS, or the WUS received by the terminal indicates not to wake up, the terminal may maintain the MR to be in a sleep state.

In an example, the WUS may be used in a radio resource control (RRC) connected state, an inactive state, an idle state, and other states.

In a possible embodiment, the MR may include four types of sleep states, such as, ultra-deep sleep, deep sleep, light sleep, and micro sleep.

One of the design principles of the LP WUR is the principle of simplicity, which is necessary to ensure that a power consumption of the LP WUR is low when the LP WUR is in an ON state. In an example, the LP WUR determines information carried by the received LP WUS using envelope detection.

In a possible embodiment, the envelope detection includes amplitude detection or energy detection, that is, the terminal determines specific information carried by the LP WUS through an amplitude or energy of the LP WUS that is sent to a base station. Under this design principle, multi-carrier on-off keying (MC-OOK) modulation, frequency-shift keying (FSK) modulation, and amplitude-shift keying (ASK) modulation become candidate modulation modes for the LP WUS.

In a possible embodiment, considering that the design based on the principle of simplicity usually leads to a lower signal coverage range, an LP WUS design scheme based on orthogonal frequency-division multiplexing (OFDM) is also considered. In this case, the LP WUR design needs to have a certain decoding capability, which may receive and decode OFDM-based wireless signals, and a coverage range of the LP WUS is wider. The power consumption of the LP WUR in the ON state is lower the power consumption of the MR in the ON state, but is higher than the power consumption of the LP WUR with the envelope detection.

In a possible embodiment, operating modes of the LP WUR include the following two modes.

An always ON mode refers to that the LP WUR is always in the on state. In this embodiment, the OFDM-based LP WUS may cause the LP WUR to consume a relatively high power when the LP WUR is in the on state, which is not conducive to power saving of the terminal.

A duty cycle mode refers to that the LP WUR is turned on in certain time periods and is turned off in other time periods. In this embodiment, the power consumption of the LP WUR may be further reduced in the duty cycle mode.

In a possible embodiment, one of the operating modes of the LP WUR is duty cycle, which may further save the power consumption of the terminal. Different from downlink control information (DCI)-based signaling, a receiving position of the LP WUS is relatively flexible. The terminal and the base station have a basic time consensus on a sending position of the LP WUS, or turning-on or turning-off of the LP WUR. The terminal may also flexibly turn-on or turn-off the LP WUR based on the above configuration of the LP WUS to achieve the purpose of further energy saving.

In a possible embodiment, the base station in the network may wake up a terminal supporting the LP WUS in a cell or change the sleep state of the terminal by sending the LP WUS. For the terminal supporting the LP WUS, at least one LP WUS is received through the LP WUR, and the wake-up of the MR or the change of the sleep state of the MR is completed based on information carried by the received at least one LP WUS.

In an example, the change of the sleep state of the MR refers to switching between states such as the ultra-deep sleep, the deep sleep, the light sleep, and the micro sleep, and the wake-up of the MR refers to switching the state of the MR from any sleep state to a wake-up state.

FIG. 2 is a diagram illustrating an interaction of a communication processing method according to an embodiment of the disclosure. As shown in FIG. 2, embodiments of the disclosure relate to a communication processing method. The method includes the following steps S2101 to S2105.

At step S2101, a network device 102 sends first information to a terminal 101.

In some embodiments, the terminal 101 receives the first information.

In some embodiments, the first information is configured to "wake up the terminal 101".

In some embodiments, the first information is configured to "configure an LP WUS configuration for the terminal 101".

In some embodiments, the name of the first information is not limited, which may be, for example, "configuration information", "LP WUS configuration information", etc.

In some embodiments, the first information includes the LP WUS configuration.

In some embodiments, the first information is carried by a configuration signal or is included in the configuration signal.

In some embodiments, the configuration signal is at least one of: an RRC signaling; a MAC CE; a dynamic indication signaling.

In some embodiments, the network device 102 may be an access network device or a core network device.

In some embodiments, the network device 102 sends the first information to the terminal 101 when preparing to send the LP WUS signal.

In some embodiments, the network device 102 sends the LP WUS signal to the terminal 101 at a fixed time, and sends the first information to the terminal 101 in a case where a current time is a preset sending time.

In some embodiments, the LP WUS configuration includes at least one of:
an LP WUS period, in an example, the LP WUS period may be a continuous time period, or in another example, the LP WUS period may be a plurality of non-continuous time periods;
an LP WUS period offset, for example, the LP WUS period offset is one or more of a radio frame offset of an LP WUS period, a slot offset of an LP WUS period, or a time domain symbol offset of an LP WUS period;
an LP WUS period length, for example, the LP WUS period length is a time domain length of an LP WUS period;
a numerical count of LP WUS sending/monitoring occasions within an LP WUS period, in an example, the numerical count of LP WUS sending/monitoring occasions within the LP WUS period is the numerical count of LP WUSs that can be monitored in one LP WUS period;
a maximum numerical count and/or a minimum numerical count of LP WUS sending/monitoring occasions within an LP WUS period;
a gap between adjacent LP WUS sending/monitoring occasions within an LP WUS period, for example, the gap between adjacent LP WUS sending/monitoring occasions includes a time domain gap and/or a frequency domain gap, in an example, the gap between adjacent LP WUS sending/monitoring occasions within the LP WUS period is a gap between adjacent LP WUS sending/monitoring occasions sent within one LP WUS period;
an LP WUS sending/monitoring occasion, in an example, the terminal needs to monitor the LP WUS during the LP WUS sending/monitoring occasion;
an LP WUS sending/monitoring occasion length, in an example, the LP WUS sending/monitoring occasion length is a time domain length that the LP WUS can be sent, or in an example, the LP WUS sending/monitoring occasion length is not greater than the LP WUS period length;
an LP WUS sending/monitoring occasion offset, in an example, the LP WUS sending/ monitoring occasion offset is an offset of time information of the LP WUS sending/monitoring occasion relative to time information of the LP WUS period;
a gap between adjacent LP WUSs within an LP WUS sending/monitoring occasion, in which the gap between adjacent LP WUSs includes a time domain gap and/or a frequency domain gap;
a maximum numerical count of LP WUSs in an LP WUS sending/monitoring occasion;
a minimum numerical count of LP WUSs in an LP WUS sending/monitoring occasion;
a numerical count of LP WUSs in an LP WUS sending/monitoring occasion, in an example, the numerical count of LP WUSs in the LP WUS sending/monitoring occasion is not less than the minimum numerical count of LP WUSs in the LP WUS sending/monitoring occasion; in an example, the numerical count of LP WUSs in the LP WUS sending/monitoring occasion is not greater than the maximum numerical count of LP WUSs in the LP WUS sending/monitoring occasion;
a sending buffer size;
a cycle buffer size;
an LP WUS sending length, in an example, the LP WUS sending length is a time domain of one whole LP WUS, in an example, the whole LP WUS includes at least one of a preamble code, a reference domain, or a reference signal, or the whole LP WUS does not include any one of the preamble code, the reference domain, or the reference signal, in an example, the LP WUS sending length is less than or equal to an LP WUS sending occasion length;
a maximum numerical count of LP WUSs consecutively sent;
a minimum numerical count of LP WUSs consecutively sent;
a numerical count of LP WUSs consecutively sent, in an example, the numerical count of LP WUSs consecutively sent is not greater than the maximum numerical count of LP WUSs consecutively sent, or the numerical count of LP WUSs consecutively sent is not less than the minimum numerical count of LP WUSs consecutively sent;
a LP WUR on-timer length;
a LP WUR off-timer length;
an offset length between time information of sending an LP WUS and time information of a discontinuous reception (DRX) period;
an offset length between time information of sending an LP WUS and time information of a DRX activation duration;
an offset length between time information of sending an LP WUS and time information of a DRX inactivation duration;
an offset length between time information of sending an LP WUS and time information of a first signal;
an offset length between time information of an LP WUS sending/monitoring occasion and time information of a DRX period;
an offset length between time information of an LP WUS sending/monitoring occasion and time information of a DRX activation duration;
an offset length between time information of an LP WUS sending/monitoring occasion and time information of a DRX inactivation duration;
an offset length between time information of an LP WUS sending/monitoring occasion and time information of a first signal;
an offset length between time information of an LP WUS period and time information of a DRX period;
an offset length between time information of an LP WUS period and time information of a DRX activation duration;
an offset length between time information of an LP WUS period and time information of a DRX inactivation duration; or
an offset length between time information of an LP WUS period and time information of a first signal.

In some embodiments, the LP WUS period offset is a combination of any items of the radio frame offset, the slot offset, or the time domain symbol offset of the LP WUS period, such as a combination of the radio frame offset and the slot offset, or a combination of the slot offset and the time domain symbol offset.

In some embodiments, the unit of measurement of the LP WUS period length may be expressed in time domain symbol, slot, radio frame, half radio frame, mini slot, millisecond (ms), microsecond (us), second (s), minute (min), etc. The LP WUS period length may include one or more continuous units of measurement or a plurality of non-continuous units of measurement.

In some embodiments, the numerical count of LP WUS sending/monitoring occasions within the LP WUS period may be the numerical count of LP WUSs that can be monitored in one LP WUS period.

In some embodiments, the gap between adjacent LP WUS sending/monitoring occasions within the LP WUS period may be the gap between the adjacent LP WUS sending/monitoring occasions sent within one LP WUS period.

In some embodiments, in the gap between adjacent LP WUS sending/monitoring occasions within the LP WUS period, the unit of measurement of the frequency domain gap may be expressed in resource block (RB), resource element (RE), physical resource block group (RBG), and the unit of measurement of the time domain gap may be expressed in time domain symbol, slot, radio frame, half radio frame, mini slot, ms, us, s, min, etc.

In some embodiments, the LP WUS sending/monitoring occasion refers to that the terminal needs to monitor the LP WUS in this time period, or the base station sends the LP WUS in this time period.

In some embodiments, the unit of measurement of the LP WUS sending/monitoring occasion length may be expressed in time domain symbol, slot, radio frame, half radio frame, mini slot, ms, us, s, min, etc.

In some embodiments, the unit of measurement of the LP WUS sending/monitoring occasion offset may be expressed in time domain symbol, slot, radio frame, half radio frame, mini slot, ms, us, s, min, etc.

In some embodiments, the gap between adjacent LP WUSs within the LP WUS sending /monitoring occasion is the frequency domain gap, and the unit of measurement of the frequency domain gap may be expressed in RB, RE, or RBG.

In some embodiments, the gap between adjacent LP WUSs within the LP WUS sending /monitoring occasion is the time domain gap, and the unit of measurement of the time domain gap may be expressed in time domain symbol, slot, radio frame, half radio frame, mini slot, ms, us, s, min, etc.

In some embodiments, the sending buffer size, that is, a buffer size of the LP WUS configuration period, is configured to prevent the LP WUR and/or the MR from being turned off for too long, resulting in an excessive time offset. The unit of measurement of the sending buffer size may be expressed in time domain symbol, slot, radio frame, half radio frame, mini slot, ms, us, s, min, etc.

In some embodiments, the cycle buffer size, that is, a buffer size of the LP WUS configuration period, is configured to prevent the LP WUR and/or the MR from being turned off for too long, resulting in an excessive time offset. The unit of measurement of the cycle buffer size may be expressed in time domain symbol, slot, radio frame, half radio frame, mini slot, ms, us, s, min, etc.

In some embodiments, the unit of measurement of the LP WUS sending length may be expressed in time domain symbol, slot, radio frame, half radio frame, mini slot, ms, us, s, min, etc.

In some embodiments, the interval between the LP WUSs consecutively sent may be a first offset, and the unit of measurement of the first offset may be expressed in time domain symbol, slot, radio frame, half radio frame, mini slot, ms, us, s, min, etc.

In some embodiments, the unit of measurement of the LP WUR on-timer length may be expressed in time domain symbol, slot, radio frame, half radio frame, mini slot, ms, us, s, min, etc.

In some embodiments, the unit of measurement of the LP WUR off-timer length may be expressed in time domain symbol, slot, radio frame, half radio frame, mini slot, ms, us, s, min, etc.

In some embodiments, the unit of measurement of the offset length between the time information of sending the LP WUS and the time information of the DRX period may be expressed in time domain symbol, slot, radio frame, half radio frame, mini slot, ms, us, s, min, etc.

In some embodiments, the unit of measurement of the offset length between the time information of sending the LP WUS and the time information of the DRX activation duration may be expressed in time domain symbol, slot, radio frame, half radio frame, mini slot, ms, us, s, min, etc.

In some embodiments, the unit of measurement of the offset length between the time information of sending the LP WUS and the time information of the DRX inactivation duration may be expressed in time domain symbol, slot, radio frame, half radio frame, mini slot, ms, us, s, min, etc.

In some embodiments, the unit of measurement of the offset length between the time information of sending the LP WUS and the time information of the first signal may be expressed in time domain symbol, slot, radio frame, half radio frame, mini slot, ms, us, s, min, etc.

In some embodiments, values of various parameters in the LP WUS configuration are all natural numbers.

In some embodiments, the first signal includes at least one of: DCP, a PEI, or a WUS.

In some embodiments, the time information includes at least one of: a starting point, an ending point, a starting point at m/2n, or an ending point at m/2n,

in which m and n are positive integers, the starting point includes a first time domain symbol, a first slot, a first radio frame or a first sub-radio frame of a time domain resource corresponding to a channel/signal, and the ending point includes a last time domain symbol, a last slot, a last radio frame or a last sub-radio frame of the time domain resource corresponding to the channel/signal.

In an example, the time information includes the starting point at m/2n, in which a value of m is 1, a value of n is 2. The time domain resource corresponding to the channel/signal includes 4 slots, and the starting point at m/2n is the third slot.

At step S2102, the terminal 101 controls a LP WUR of the terminal to receive at least one LP WUS based on the LP WUS configuration.

In some embodiments, the terminal turns on the LP WUR at the LP WUS sending/monitoring occasion.

In some embodiments, the terminal turns on the LP WUR in a duration of (sending buffer size + LP WUS sending/ monitoring occasion + sending buffer size).

In some embodiments, the terminal determines a start time of the LP WUR based on the sending buffer size, the LP WUS sending/ monitoring occasion and the sending buffer size.

In some embodiments, the terminal determines the start time of the LP WUR based on the LP WUS sending/ monitoring occasion and the sending buffer size.

In some embodiments, the terminal determines the start time of the LP WUR based on the sending buffer size and the LP WUS sending/ monitoring occasion.

In some embodiments, the terminal turns on the LP WUR during the LP WUR on-timer length.

In some embodiments, the terminal turns off the LP WUR during the LP WUR off-timer length.

At step S2103, the terminal 101 determines an operation state of the MR of the terminal based on the at least one LP WUS.

In some embodiments, the LP WUS indicates to wake up.

In some embodiments, the LP WUS does not indicate to wake up.

In some embodiments, the at least one LP WUS does not indicate to wake up, then the terminal turns off the MR in a subsequent DRX on duration.

In some embodiments, the at least one LP WUS does not indicate to wake up, then the terminal turns off the MR in a subsequent duration.

In some embodiments, the at least one LP WUS indicates to wake up, then the terminal turns on the MR.

In some embodiments, the at least one LP WUS does not indicate to wake up, then the terminal does not monitor a first signal.

In some embodiments, the network device does not send the LP WUS to the terminal since the network device does not expect the terminal to receive the LP WUS.

In some embodiments, in a case where the at least one LP WUS is not received, the terminal does not turn on the MR in the subsequent DRX on duration.

In some embodiments, in a case where the at least one LP WUS is not received, then the terminal turns off the MR in the subsequent duration.

In some embodiments, in a case where the at least one LP WUS is not received, then the terminal does not monitor the first signal.

At step S2104, the terminal 101 sends second information to the network device 102.

In some embodiments, the network device 102 receives the second information.

In some embodiments, the second information is configured to "report a first terminal (UE) capability".

In some embodiments, the name of the second information is not limited, which may be, for example, "terminal capability" or the like.

In some embodiments, the terminal capability includes a minimum value of the first offset.

In some embodiments, the terminal capability includes a maximum value of the first offset.

In some embodiments, the first offset includes at least one of:
an LP WUS period offset;
an LP WUS sending/monitoring occasion offset;
an offset between time information of sending an LP WUS and time information of a DRX period;
an offset between time information of sending an LP WUS and time information of a DRX activation duration;
an offset between time information of sending an LP WUS and time information of a DRX inactivation duration;
an offset between time information of sending an LP WUS and time information of a first signal;
an offset between time information of an LP WUS sending/monitoring occasion and time information of a DRX period;
an offset between time information of an LP WUS sending/monitoring occasion and time information of a DRX activation duration;
an offset between time information of an LP WUS sending/monitoring occasion and time information of a DRX inactivation duration;
an offset between time information of an LP WUS sending/monitoring occasion and time information of a first signal;
an offset between time information of an LP WUS period and time information of a DRX period;
an offset between time information of an LP WUS period and time information of a DRX activation duration;
an offset between time information of an LP WUS period and time information of a DRX inactivation duration; or
an offset between time information of an LP WUS period and time information of a first signal.

At step S2105, the network device 102 determines the LP WUS configuration.

In some embodiments, the network device 102 receives the second information.

In some embodiments, the network device 102 determines the LP WUS configuration based on the second information.

In some embodiments, the network device 102 determines a communication capability of the terminal based on the terminal capability in the second information, and determines the LP WUS configuration based on the terminal capability.

In some embodiments, the terminal capability includes the minimum value of the first offset.

In some embodiments, the terminal capability includes the maximum value of the first offset.

In some embodiments, in the LP WUS configuration configured by the network device for the terminal, a value of the first offset is not greater than the maximum value of the first offset.

In some embodiments, in the LP WUS configuration configured by the network device for the terminal, the value of the first offset is not less than the minimum value of the first offset.

In some embodiments, names of information and the like are not limited to the names recorded in the embodiments. The terms such as "information", "message", "signal", "signaling", "report", "configuration", "indication", "instruction", "command", "channel", "parameter", "field", "symbol", "codepoint", "bit", "data", "program", "chip" may be used interchangeably.

In some embodiments, the terms such as "uplink", "up link" "physical uplink" may be used interchangeably. The terms such as "downlink", "down link", "physical down link" may be used interchangeably. The terms such as "side", "sidelink", "side communication", "sidelink communication", "direct", "direct link", "direct communication", "direct link communication" may be used interchangeably.

In some embodiments, the terms such as "DCI", "DL assignment", "DL DCI", "UL grant", "UL DCI" may be used interchangeably.

In some embodiments, the terms such as "PDSCH", "DL data" may be used interchangeably. The terms such as "PUSCH", "UL data" may be used interchangeably.

In some embodiments, the terms such as "radio", "wireless", "radio access network (RAN)", "access network (AN)", "RAN-based" and the like may be used interchangeably.

In some embodiments, the terms such as "search space", "search space set", "search space configuration", "search space set configuration", "control resource set (CORESET)", "CORESET configuration" and the like may be used interchangeably.

In some embodiments, the terms such as "synchronization signal (SS)", "synchronization signal block (SSB)", "reference signal (RS)", "pilot", "report", "pilot signal" may be used interchangeably.

In some embodiments, the terms such as "moment", "time point", "time", "time position" and the like may be interchangeable, and the terms such as "duration", "period", "time window", "window", "time" and the like may be interchangeable.

In some embodiments, the terms such as "component carrier (CC)", "cell", "frequency carrier", "carrier frequency" and the like may be used interchangeably.

In some embodiments, the terms such as "resource block (RB)", "physical resource block (PRB)", "sub-carrier group (SCG)", "resource element group (REG)", "PRB pair", "RB pair", "resource element (RE)", and "sub-carrier" may be used interchangeably.

In some embodiments, the terms such as "wireless access scheme", "waveform" and the like may be interchangeable.

In some embodiments, the terms "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like may be used interchangeably.

In some embodiments, the terms such as "frame", "radio frame", "reference signal (RS)", "subframe", "slot", "sub-slot", "mini-slot", "symbol", "transmission time interval (TTI)", may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bi-directionally transmit", "send and/or receive" and the like may be used interchangeably.

In some embodiments, the terms such as "certain", "preset", "predetermined", "set", "indicated", "a", "any", "first", and the like may be used interchangeable. "Certain A", "preset A", "predetermined A", "set A", "indicated A", "a A", "any A", "first A" may be interpreted as A predefined in a protocol, or as A acquired via setting, configuration, or indication, or as certain A, a A, any A, or first A, etc., but is not limited herein.

In some embodiments, the determination or judgment may be performed by a value represented by 1 bit (0 or 1), or by a true/false value (Boolean value) represented by true or false, or by comparison of numerical values (for example, comparison with a predetermined value), but is not limited herein.

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

The communication method in the embodiments of the disclosure may include at least one of step S2101 to step S2105. For example, step S2101 may be implemented as an independent embodiment, step S2102 may be implemented as an independent embodiment, step S2103 may be implemented as an independent embodiment, step S2101 and step S2102 may be implemented as an independent embodiment, step S2103 and step S2104 may be implemented as an independent embodiment, step S2105 and step S2102 may be implemented as an independent embodiment, and step S2101, step S2102 and step S2105 may be implemented as an independent embodiment, which is not limited herein.

In some embodiments, step S2101 and step S2105 may be executed in an exchanged order or simultaneously, and step S2101 and step S2103 may be executed in an exchanged order or simultaneously.

In some embodiments, step S2103 and step S2104 are optional, and one or more of the steps may be omitted or substituted in different embodiments.

In some embodiments, step S2101, step S2102 and step S2105 are optional, and one or more of the steps may be omitted or substituted in different embodiments.

In some embodiments, reference may be made to other optional implementations described before or after the description corresponding to FIG. 2.

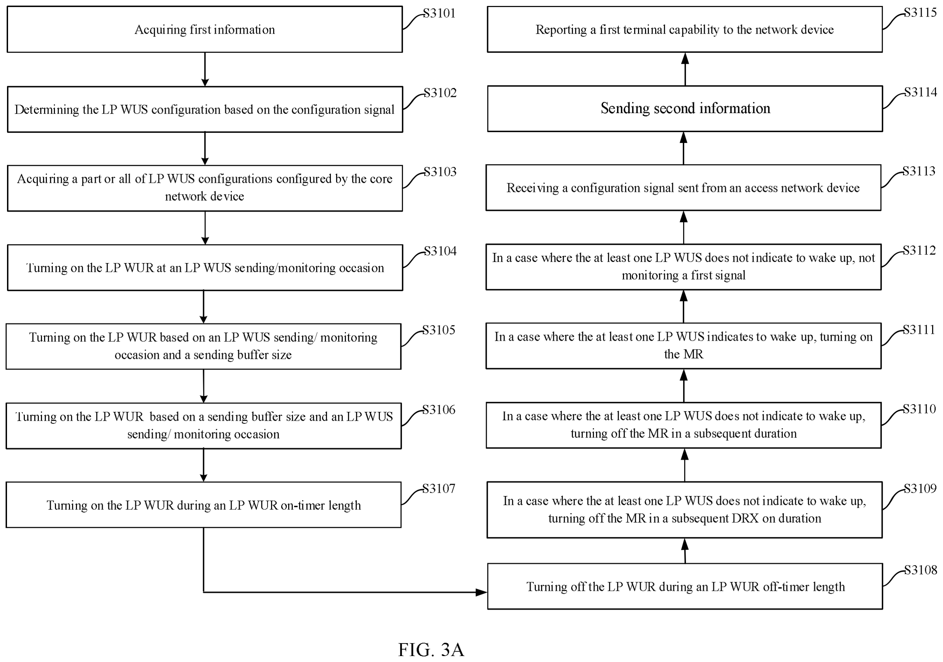

FIG. 3A is a flowchart illustrating a communication processing method according to an embodiment of the disclosure. As shown in FIG. 3A, embodiments of the disclosure relate to a communication processing method. The method includes the following steps S3101 to S3115.

At step S3101, first information is acquired.

For optional implementations of step S3101, reference may be made to the optional implementations of step S2101 in FIG. 2 and other related parts in the embodiments related to FIG. 2, which are not repeated herein.

In some embodiments, a terminal 101 receives the first information sent from an access network device 102, but it is not limited herein. The terminal 101 may receive the first information sent from another entity.

In some embodiments, the terminal 101 acquires the first information specified by a protocol.

In some embodiments, the terminal 101 acquires the first information from an upper layer(s).

In some embodiments, the terminal 101 acquires the first information by performing processing.

In some embodiments, step S3101 is omitted. The terminal 101 autonomously implements a function indicated by the first information, or the function is default.

At step S3102, an LP WUS configuration is determined based on a configuration signal.

For optional implementations of step S3102, reference may be made to the optional implementations of step S2101 in FIG. 2 and other related parts in the embodiments related to FIG. 2, which are not repeated herein.

At step S3103, a part or all of LP WUS configurations configured by the core network device may be acquired.

For optional implementations of step S3103, reference may be made to the optional implementations of step S2101 in FIG. 2 and other related parts in the embodiments related to FIG. 2, which are not repeated herein.

At step S3104, the LP WUR is turned on at an LP WUS sending/monitoring occasion.

For optional implementations of step S3104, reference may be made to the optional implementations of step S2102 in FIG. 2 and other related parts in the embodiments related to FIG. 2, which are not repeated herein.

At step S3105, the LP WUR is turned on according to an LP WUS sending/ monitoring occasion and a sending buffer size.

For optional implementations of step S3105, reference may be made to the optional implementations of step S2102 in FIG. 2 and other related parts in the embodiments related to FIG. 2, which are not repeated herein.

At step S3106, the LP WUR is turned on based on the sending buffer size and the LP WUS sending/ monitoring occasion.

For optional implementations of step S3106, reference may be made to the optional implementations of step S2102 in FIG. 2 and other related parts in the embodiments related to FIG. 2, which are not repeated herein.

At step S3107, the LP WUR is turned on during an LP WUR on-timer length.

For optional implementations of step S3107, reference may be made to the optional implementations of step S2102 in FIG. 2 and other related parts in the embodiments related to FIG. 2, which are not repeated herein.

At step S3108, the LP WUR is turned off during an LP WUR off-timer length.

For optional implementations of step S3108, reference may be made to the optional implementations of step S2102 in FIG. 2 and other related parts in the embodiments related to FIG. 2, which are not repeated herein.

At step S3109, in a case where the at least one LP WUS does not indicate to wake up, the MR is turned off in a subsequent DRX on duration.

For optional implementations of step S3109, reference may be made to the optional implementations of step S2103 in FIG. 2 and other related parts in the embodiments related to FIG. 2, which are not repeated herein.

At step S3110, in a case where the at least one LP WUS does not indicate to wake up, the MR is turned off in a subsequent duration.

For optional implementations of step S3110, reference may be made to the optional implementations of step S2103 in FIG. 2 and other related parts in the embodiments related to FIG. 2, which are not repeated herein.

At step S3111, in a case where the at least one LP WUS indicates to wake up, the MR is turned on.

For optional implementations of step S3111, reference may be made to the optional implementations of step S2103 in FIG. 2 and other related parts in the embodiments related to FIG. 2, which are not repeated herein.

At step S3112, in a case where the at least one LP WUS does not indicate to wake up, a first signal is not monitored.

For optional implementations of step S3112, reference may be made to the optional implementations of step S2103 in FIG. 2 and other related parts in the embodiments related to FIG. 2, which are not repeated herein.

At step S3113, a configuration signal sent from an access network device is received.

For optional implementations of step S3113, reference may be made to the optional implementations of step S2103 in FIG. 2 and other related parts in the embodiments related to FIG. 2, which are not repeated herein.

At step S3114, second information is sent.

For optional implementations of step S3114, reference may be made to the optional implementations of step S2104 in FIG. 2 and other related parts in the embodiments related to FIG. 2, which are not repeated herein.

In some embodiments, the terminal 101 sends the second information to the access network device 102, but is not limited thereto. The terminal 101 may also send the second information to other entities.

In an example, the second information is configured for the access network device 102 to determine the LP WUS configuration. For optional implementations thereof, reference may be made to the optional implementations of step S2105 in FIG. 2 and other related parts in the embodiments related to FIG. 2, which are not repeated herein.

At step S3115, a terminal capability is reported to the network device.

For optional implementations of step S3115, reference may be made to the optional implementations of step S2104 in FIG. 2 and other related parts in the embodiments related to FIG. 2, which are not repeated herein.

The communication method in the embodiments of the disclosure may include at least one of step S3101 to step S3115. For example, step S3101 may be implemented as an independent embodiment, step S3102 may be implemented as an independent embodiment, step S3115 may be implemented as an independent embodiment, step S3116 may be implemented as an independent embodiment, step S3115 and step S3116 may be implemented as an independent embodiment, and step S3102, step S3104 and step S3115 may be implemented as an independent embodiment, which is not limited herein.

In some embodiments, step S3101 and step S3102 may be executed in an exchanged order or simultaneously, and step S3102 and step S3115 may be executed in an exchanged order or simultaneously.

In some embodiments, step S3102 and step S3103 are optional, and one or more of the steps may be omitted or substituted in different embodiments.

In some embodiments, step S3104 to step S3108 are optional, and one or more of the steps may be omitted or substituted in different embodiments.

In some embodiments, step S3109 to step S3113 are optional, and one or more of the steps may be omitted or substituted in different embodiments.

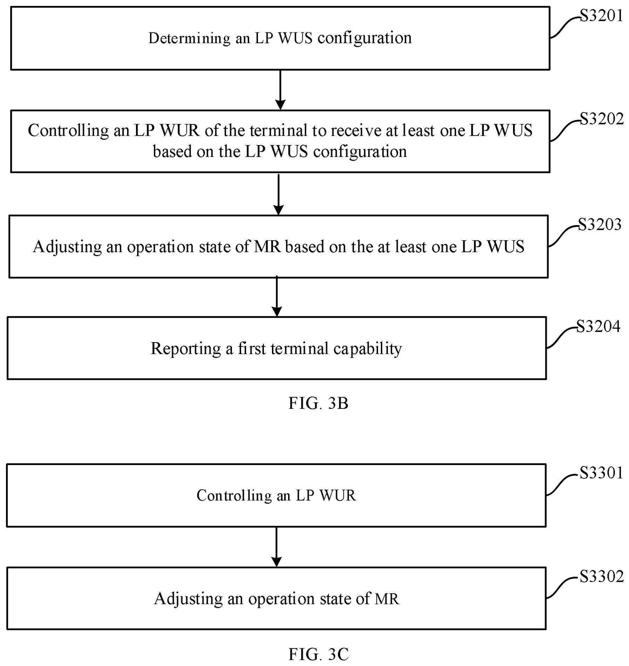

FIG. 3B is a flowchart illustrating a communication processing method according to an embodiment of the disclosure. As shown in FIG. 3B, embodiments of the disclosure relate to a communication processing method. The method includes the following steps S3201 to S3204.

At step S3201, an LP WUS configuration is determined.

For optional implementations of step S3201, reference may be made to the optional implementations of step S2102 in FIG. 2, steps S3101 to S3103 in FIG. 3A, and other related parts in the embodiments related to FIG. 2 and FIG. 3A, which are not repeated herein.

At step S3202, a LP WUR of the terminal is controlled to receive at least one LP WUS based on the LP WUS configuration.

For optional implementations of step S3202, reference may be made to the optional implementations of step S2102 in FIG. 2, steps S3104 to S3108 in FIG. 3A, and other related parts in the embodiments related to FIG. 2 and FIG. 3A, which are not repeated herein.

At step S3203, an operation state of MR is determined based on the at least one LP WUS.

For optional implementations of step S3203, reference may be made to the optional implementations of step S2102 in FIG. 2, steps S3109 to S3113 in FIG. 3A, and other related parts in the embodiments related to FIG. 2 and FIG. 3A, which are not repeated herein.

At step S3204, a terminal capability is reported.

For optional implementations of step S3204, reference may be made to the optional implementations of step S2103 in FIG. 2, steps S3114 to S3115 in FIG. 3A, and other related parts in the embodiments related to FIG. 2 and FIG. 3A, which are not repeated herein.

The communication method in the embodiments of the disclosure may include at least one of step S3201 to step S3204. For example, step S3201 may be implemented as an independent embodiment, step S3202 may be implemented as an independent embodiment, step S3203 may be implemented as an independent embodiment, step S3204 may be implemented as an independent embodiment, step S3201 and step S3202 may be implemented as an independent embodiment, step S3201 and step S3203 may be implemented as an independent embodiment, and step S3201, step S3202 and step S3203 may be implemented as an independent embodiment, which is not limited herein.

In some embodiments, step S3202 and step S3203 may be executed in an exchanged order or simultaneously.

In some embodiments, step S3202, step S3203 and step S3204 are optional, and one or more of the steps may be omitted or substituted in different embodiments.

In some embodiments, step S3201, step S3202 and step S3203 are optional, and one or more of the steps may be omitted or substituted in different embodiments.

FIG. 3C is a flowchart illustrating a communication processing method according to an embodiment of the disclosure. As shown in FIG. 3C, embodiments of the disclosure relate to a communication processing method. The method includes the following steps S3201 to S3204.

At step S3301, a LP WUR is controlled.

In an optional embodiment, step S3301 includes a subordinate implementation (middle generalization) step S3202. For optional implementations of step S3301, reference may be made to the optional implementations of step S2102 in FIG. 2, steps S3104 to S3108 in FIG. 3A, steps S3202 in FIG. 3B, and other related parts in the embodiments related to FIG. 2, FIG. 3A, and FIG. 3B, which are not repeated herein.

At step S3302, an operation state of MR is adjusted.

In an optional embodiment, step S3302 includes a subordinate implementation (middle generalization) step S3203. For optional implementations of step S3302, reference may be made to the optional implementations of step S2102 in FIG. 2, steps S3109 to S3113 in FIG. 3A, steps S3203 in FIG. 3B, and other related parts in the embodiments related to FIG. 2, FIG. 3A, and FIG. 3B, which are not repeated herein.

The communication method in the embodiments of the disclosure may include at least one of step S3301 to step S3302. For example, step S3301 may be implemented as an independent embodiment, step S3302 may be implemented as an independent embodiment, step 1 and step 3 may be implemented as an independent embodiment, and step S3301 and step S3302 may be implemented as an independent embodiment, which is not limited herein.

In some embodiments, step S3301 and step S3302 may be executed in an exchanged order or simultaneously.

In some embodiments, step S3301 is optional, and one or more of the steps may be omitted or substituted in different embodiments.

In some embodiments, step S3302 is optional, and one or more of the steps may be omitted or substituted in different embodiments.

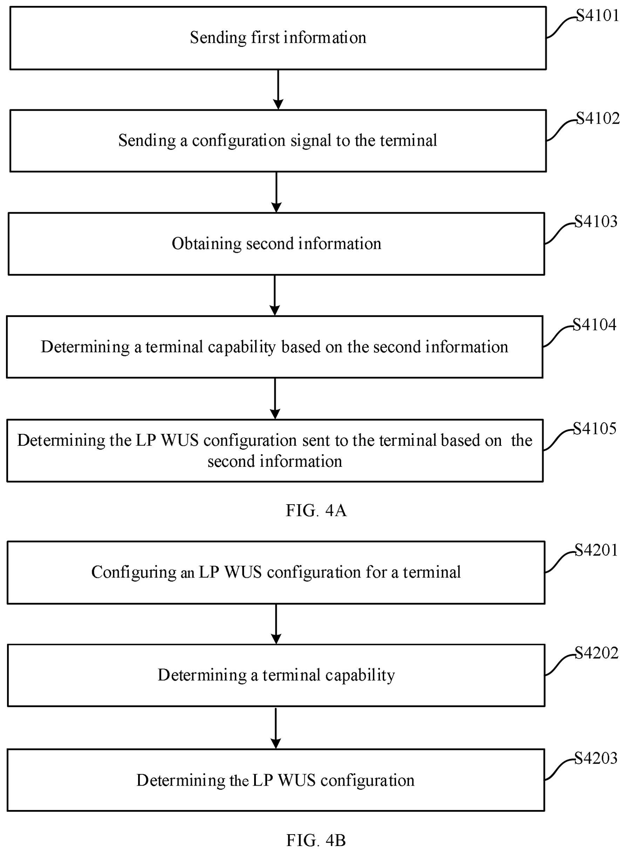

FIG. 4A is a flowchart illustrating a communication processing method according to an embodiment of the disclosure. As shown in FIG. 4A, embodiments of the disclosure relate to a communication processing method. The method includes the following steps S4101 to S4103.

At step S4101, first information is sent.

For optional implementations of step S4101, reference may be made to the optional implementations of step S2101 in FIG. 2, and other related parts in the embodiments related to FIG. 2, which are not repeated herein.

In some embodiments, an access network device 102 sends the first information to a terminal 101, but it is not limited herein. The access network device 102 may also send the first information to another entity.

In some embodiments, a core network device 103 sends the first information to a terminal 101, but it is not limited herein. The core network device 103 may also send the first information to another entity.

In an example, the first information is configured for the terminal 101 to acquire an LP WUS configuration. For the optional implementation method thereof, reference may be made to the optional implementations of step S2102 in FIG. 2 and other related parts in the embodiment related to FIG. 2, which are not repeated herein.

At step S4102, a configuration signal is sent to the terminal.

For optional implementations of step S4102, reference may be made to the optional implementations of step S2101 in FIG. 2, and other related parts in the embodiments related to FIG. 2, which are not repeated herein.

At step S4103, second information is acquired.

For optional implementations of step S4103, reference may be made to the optional implementations of step S2103 in FIG. 2 and other related parts in the embodiments related to FIG. 2, which are not repeated herein.

In some embodiments, the access network device 102 receives the second information sent from the terminal 101, but it is not limited herein. The access network device 102 may receive the second information sent from another entity.

In some embodiments, the access network device 102 acquires the second information specified by a protocol.

In some embodiments, the access network device 102 acquires the second information from an upper layer(s).

In some embodiments, the access network device 102 acquires the second information by performing processing.

In some embodiments, step S4102 is omitted. The access network device 102 autonomously implements a function indicated by the second information, or the function is default.

At step S4104, a terminal capability is determined based on the second information.

For optional implementations of step S4104, reference may be made to the optional implementations of step S2103 in FIG. 2 and other related parts in the embodiments related to FIG. 2, which are not repeated herein.

At step S4105, an LP WUS configuration sent to the terminal is determined based on the second information.

For optional implementations of step S4105, reference may be made to the optional implementations of step S2104 in FIG. 2 and other related parts in the embodiments related to FIG. 2, which are not repeated herein.

In an example, the LP WUS configuration in the first information sent to the terminal is determined based on the second information.

The communication method in the embodiments of the disclosure may include at least one of step S4101 to step S4105. For example, step S4101 may be implemented as an independent embodiment, step S4102 may be implemented as an independent embodiment, step S4104 may be implemented as an independent embodiment, step S4101 and step S4102 may be implemented as an independent embodiment, step S4101 and step S4103 may be implemented as an independent embodiment, step S4103 and step S4104 may be implemented as an independent embodiment, step S4101, S4102 and step S4103 may be implemented as an independent embodiment, which is not limited herein.

In some embodiments, step S4102 and step S4103 may be executed in an exchanged order or simultaneously, and step S4101and step S4103 may be executed in an exchanged order or simultaneously.

In some embodiments, step S4101 and step S4102 are optional, and one or more of the steps may be omitted or substituted in different embodiments.

In some embodiments, step S4103 and step S4104 are optional, and one or more of the steps may be omitted or substituted in different embodiments.

FIG. 4B is a flowchart illustrating a communication processing method according to an embodiment of the disclosure. As shown in FIG. 4B, embodiments of the disclosure relate to a communication processing method. The method includes the following steps S3201 to S3204.

At step S4201, an LP WUS configuration is configured for a terminal.

For optional implementations of step S4201, reference may be made to the optional implementations of step S2101 in FIG. 2, step S4101 and step S4102 in FIG. 4A, and other related parts in the embodiments related to FIG. 2, and FIG. 4A, which are not repeated herein.

At step S4202, a terminal capability is determined.

For optional implementations of step S4202, reference may be made to the optional implementations of step S2103 and step S2104 in FIG. 2, step S4103 and step S4104 in FIG. 4A, and other related parts in the embodiments related to FIG. 2, and FIG. 4A, which are not repeated herein.

At step S4203, the LP WUS configuration is determined.

For optional implementations of step S4203, reference may be made to the optional implementations of step S2104 in FIG. 2, step S4105 in FIG. 4A, and other related parts in the embodiments related to FIG. 2, and FIG. 4A, which are not repeated herein.

The communication method in the embodiments of the disclosure may include at least one of step S4201 to step S4203. For example, step S4201 may be implemented as an independent embodiment, step S4202 may be implemented as an independent embodiment, step S4201 and step S4202 may be implemented as an independent embodiment, step S4201, step S4202 and step S4203 may be implemented as an independent embodiment, which is not limited herein.

In some embodiments, step S4201 and step S4202 may be executed in an exchanged order or simultaneously.

In some embodiments, step S4201 and step S4202 are optional, and one or more of the steps may be omitted or substituted in different embodiments.

In some embodiments, step S4203 is optional, and one or more of the steps may be omitted or substituted in different embodiments.

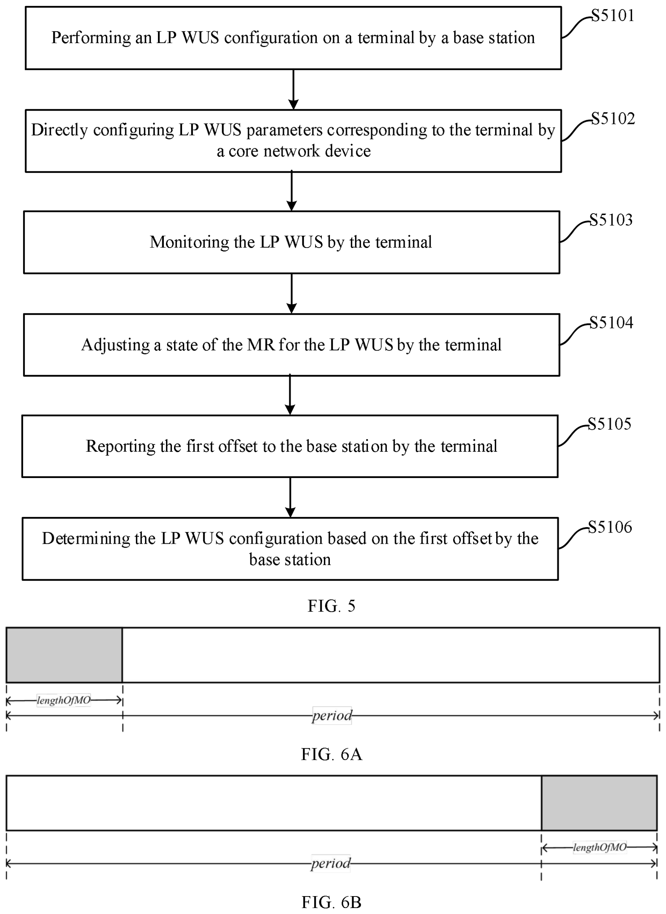

FIG. 5 is a flowchart illustrating a communication processing method according to an embodiment of the disclosure. As shown in FIG. 5, embodiments of the disclosure relate to a communication processing method. The method includes the following steps S5101 to S5106.

At step S5101, a base station performs an LP WUS configuration on a terminal.

In an example, in a network, the base station may wake up a terminal supporting an LP WUS in a cell or change a sleep state of the terminal by sending the LP WUS. For the terminal supporting the LP WUS, at least one LP WUS is received through an LP WUR, and wake-up of MR or a change of the sleep state of MR is completed based on information carried by the at least one LP WUS received. The change of the sleep state of the MR refers to switching between states such as an ultra-deep sleep, a deep sleep, a light sleep, and a micro sleep, and the wake-up of the MR refers to switching the state of the MR from any sleep state to a wake-up state.

At step S5102, a core network device directly configures LP WUS parameters corresponding to the terminal.

In an example, the core network configures a part or all of parameters of the LP WUS.

In an example, relevant parameters of the LP WUS configuration include at least one of:
an LP WUS period, that is, an LP WUS configuration period, which may be a continuous time period, or a plurality of non-continuous time periods;
an LP WUS period offset, that is, a radio frame offset, and/or a slot offset, and/or a time domain symbol offset of an LP WUS configuration period;
an LP WUS period length, that is, a time domain length of an LP WUS configuration period, the unit of measurement may be expressed in time domain symbol, slot, radio frame, half radio frame, mini slot, ms, us, s, min, etc., which may include one or more continuous units of measurement or a plurality of non-continuous units of measurement;
a numerical count of LP WUS sending/monitoring occasions within an LP WUS period, that is, the numerical count of LP WUSs that can be monitored in one LP WUS period;
a maximum numerical count and/or a minimum numerical count of LP WUS sending/monitoring occasions within an LP WUS period;
a gap between adjacent LP WUS sending/monitoring occasions within an LP WUS period, that is, the gap between the adjacent LP WUS sending/monitoring occasions sent within one LP WUS period, which may include a time domain gap and/or a frequency domain gap; the unit of measurement of the frequency domain gap may be expressed in RB, RE, RBG, and the unit of measurement of the time domain gap may be expressed in time domain symbol, slot, radio frame, half radio frame, mini slot, ms, us, s, min, etc.;
an LP WUS sending/monitoring occasion, that is, the terminal needs to monitor an LP WUS in a time period, or the base station sends the LP WUS in a time period, which may be a continuous time period, or a plurality of non-continuous time periods;
an LP WUS sending/monitoring occasion length, that is, a time domain length that the LP WUS can be sent is not be greater than an LP WUS period length, the unit of measurement may be expressed in time domain symbol, slot, radio frame, half radio frame, mini slot, ms, us, s, min, etc.;
an LP WUS sending/monitoring occasion offset, that is, an offset between time information of an LP WUS sending/monitoring occasion and time information of an LP WUS period, the unit of measurement may be expressed in time domain symbol, slot, radio frame, half radio frame, mini slot, ms, us, s, min, etc.;
a gap between adjacent LP WUSs within an LP WUS sending /monitoring occasion, that is, a gap between adjacent LP WUSs sent within one LP WUS sending /monitoring occasion, which may include a time domain gap and/or a frequency domain gap; the unit of measurement of the frequency domain gap may be expressed in RB, RE, RBG, and the unit of measurement of the time domain gap may be expressed in time domain symbol, slot, radio frame, half radio frame, mini slot, ms, us, s, min, etc.;
a numerical count of LP WUSs in an LP WUS sending/monitoring occasion, that is, the number of LP WUSs sent in one LP WUS sending/monitoring occasion;
a maximum numerical count or a minimum numerical count of LP WUSs in an LP WUS sending/monitoring occasion;
a sending buffer size, that is, a buffer size of an LP WUS configuration period, is configured to prevent the LP WUR and/or the MR from being turned off for too long, resulting in an excessive time offset, the unit of measurement of the sending buffer size may be expressed in time domain symbol, slot, radio frame, half radio frame, mini slot, ms, us, s, min, etc.;
a cycle buffer size, that is, a buffer size of an LP WUS configuration period, is configured to prevent the LP WUR and/or the MR from being turned off for too long, resulting in an excessive time offset, the unit of measurement of the cycle buffer size may be expressed in time domain symbol, slot, radio frame, half radio frame, mini slot, ms, us, s, min, etc.;
an LP WUS sending length, that is, a time domain of one whole LP WUS, the whole LP WUS includes or does not include any one of a preamble code, a reference domain, or a reference signal, the LP WUS sending length is less than or equal to an LP WUS sending occasion length, the unit of measurement may be expressed in time domain symbol, slot, radio frame, half radio frame, mini slot, ms, us, s, min, etc.;
a numerical count of LP WUSs consecutively sent, that is, the number of LP WUS consecutively sent, an interval between the LP WUSs consecutively sent may be a first offset, and the unit of measurement of the first offset may be expressed in time domain symbol, slot, radio frame, half radio frame, mini slot, ms, us, s, min, etc.;
a maximum numerical count or a minimum numerical count of LP WUSs consecutively sent;
a LP WUR on-timer length, that is, a length of a time domain of an LP WUR on-timer, the unit of measurement may be expressed in time domain symbol, slot, radio frame, half radio frame, mini slot, ms, us, s, min, etc.;
a LP WUR off-timer length, that is, a length of a time domain of an LP WUR off -timer, the unit of measurement may be expressed in time domain symbol, slot, radio frame, half radio frame, mini slot, ms, us, s, min, etc.;
an offset length between time information of sending the LP WUS and time information of a discontinuous reception (DRX) period, the unit of measurement may be expressed in time domain symbol, slot, radio frame, half radio frame, mini slot, ms, us, s, min, etc.;
an offset length between time information of sending an LP WUS and time information of a DRX activation duration, the unit of measurement may be expressed in time domain symbol, slot, radio frame, half radio frame, mini slot, ms, us, s, min, etc.;
an offset length between time information of sending an LP WUS and time information of a DRX inactivation duration, the unit of measurement may be expressed in time domain symbol, slot, radio frame, half radio frame, mini slot, ms, us, s, min, etc.;
an offset length between time information of sending an LP WUS and time information of a first signal, the unit of measurement may be expressed in time domain symbol, slot, radio frame, half radio frame, mini slot, ms, us, s, min, etc., the first signal includes, but is not limited, DCP, a PEI, or a WUS, etc.;
an offset length between time information of an LP WUS sending/monitoring occasion and time information of a DRX period, the unit of measurement may be expressed in time domain symbol, slot, radio frame, half radio frame, mini slot, ms, us, s, min, etc.;
an offset length between time information of an LP WUS sending/monitoring occasion and time information of a DRX activation duration, the unit of measurement may be expressed in time domain symbol, slot, radio frame, half radio frame, mini slot, ms, us, s, min, etc.;
an offset length between time information of an LP WUS sending/monitoring occasion and time information of a DRX inactivation duration, the unit of measurement may be expressed in time domain symbol, slot, radio frame, half radio frame, mini slot, ms, us, s, min, etc.;
an offset length between time information of an LP WUS sending/monitoring occasion and time information of a first signal, the unit of measurement may be expressed in time domain symbol, slot, radio frame, half radio frame, mini slot, ms, us, s, min, etc., the first signal includes, but is not limited, DCP, a PEI, or a WUS, etc.;
an offset length between time information of an LP WUS period and time information of a DRX period, the unit of measurement may be expressed in time domain symbol, slot, radio frame, half radio frame, mini slot, ms, us, s, min, etc.;
an offset length between time information of an LP WUS period and time information of a DRX activation duration, the unit of measurement may be expressed in time domain symbol, slot, radio frame, half radio frame, mini slot, ms, us, s, min, etc.;
an offset length between time information of an LP WUS period and time information of a DRX inactivation duration, the unit of measurement may be expressed in time domain symbol, slot, radio frame, half radio frame, mini slot, ms, us, s, min, etc.; or
an offset length between time information of an LP WUS period and time information of a first signal, the unit of measurement may be expressed in time domain symbol, slot, radio frame, half radio frame, mini slot, ms, us, s, min, etc., the first signal includes, but is not limited, DCP, a PEI, or a WUS, etc.

Furthermore, all of the above values are natural numbers.

Further, the time information includes: a starting point, an ending point, a starting point at m/2n, or an ending point at m/2n, in which m and n are positive integers. The starting point includes a first time domain symbol, a first slot, a first radio frame or a first sub-radio frame of a time domain resource corresponding to a channel/signal, and the ending point includes a last time domain symbol, a last slot, a last radio frame or a last sub-radio frame of the time domain resource corresponding to the channel/signal. The starting point at m/2n includes a m/2n-th time domain symbol, a m/2n-th slot, a m/2n-th radio frame or a m/2n-th sub-radio frame of the time domain resource corresponding to the channel/signal, and the ending point at m/2n includes a last m/2n time domain symbol, a last m/2n slot, a last m/2n radio frame or a last m/2n sub-radio frame of the time domain resource corresponding to the channel/signal.

At step S5103, the terminal monitors the LP WUS.

In an example, when the terminal is configured with the LP WUS, its behavior is limited to at least one of the following.

If the terminal supports the LP WUS, the terminal is expected to turn on the LP WUR at its corresponding LP WUS sending/ monitoring occasion.

If the terminal supports the LP WUS, the terminal is expected to turn on the LP WUR during its corresponding duration of (sending buffer size + LP WUS sending/ monitoring occasion + sending buffer size), that is, there are the buffer size before and after.

If the terminal supports the LP WUS, the terminal is expected to turn on the LP WUR during its corresponding duration of (LP WUS sending/ monitoring occasion + sending buffer size).

If the terminal supports the LP WUS, the terminal is expected to turn on the LP WUR during its corresponding duration of (sending buffer size + LP WUS sending/ monitoring occasion).

At step S5104, the terminal determines a state of the MR for the LP WUS.

In an example, when the terminal is configured with the LP WUS, its behavior is limited to at least one of the following.

If the terminal supports the LP WUS, the terminal is expected to turn on the LP WUR during its corresponding LP WUR on-timer length.

If the terminal supports the LP WUS, the terminal is expected to turn on the LP WUR during its corresponding LP WUR off-timer length.

If the terminal supports the LP WUS, the terminal does not expect the base station to send the LP WUS to the terminal during its corresponding LP WUR off-timer length.

When the terminal receives the LP WUS and the LP WUS does not indicate to wake up, the terminal does not turn on the MR in the subsequent DRX on duration.

When the terminal receives the LP WUS and the LP WUS does not indicate to wake up, the terminal does not turn on the MR in the subsequent duration until the LP WUR receives the LP WUS and the LP WUS indicates to wake up.

When the terminal receives the LP WUS and the LP WUS does not indicate to wake up, the terminal does not monitor the subsequent first signal, in which the first signal includes but is not limited to the DCP, the PEI, the WUS, etc.

In an example, when the terminal does not receive the LP WUS, the terminal does not turn on the MR in the subsequent DRX on duration.

In an example, when the terminal does not receive the LP WUS or the LP WUS does not indicate to wake up, the terminal does not turn on the MR in the subsequent duration until the LP WUR receives the LP WUS and the LP WUS indicates to wake up.

In an example, when the terminal does not receive the LP WUS or the LP WUS does not indicate to wake up, the terminal does not monitor the subsequent first signal, in which, the first signal includes, but is not limited to, the DCP, the PEI, the WUS, etc.

At step S5105, the terminal reports the first offset to the base station.

In an example, the terminal reports a minimum first offset through a first UE capability.

In an example, the terminal reports a maximum first offset through a first UE capability.

In an example, the first offset includes at least one of:
an LP WUS period offset;
an LP WUS sending/monitoring occasion offset;
an offset between time information of sending an LP WUS and time information of a DRX period;
an offset between time information of sending an LP WUS and time information of a DRX activation duration;
an offset between time information of sending an LP WUS and time information of a DRX inactivation duration;
an offset between time information of sending an LP WUS and time information of a first signal;
an offset between time information of an LP WUS sending/monitoring occasion and time information of a DRX period;
an offset between time information of an LP WUS sending/monitoring occasion and time information of a DRX activation duration;
an offset between time information of an LP WUS sending/monitoring occasion and time information of a DRX inactivation duration;
an offset between time information of an LP WUS sending/monitoring occasion and time information of a first signal;
an offset between time information of an LP WUS period and time information of a DRX period;
an offset between time information of an LP WUS period and time information of a DRX activation duration;
an offset between time information of an LP WUS period and time information of a DRX inactivation duration; or
an offset between time information of an LP WUS period and time information of a first signal.

At step S5106, the base station determines the LP WUS configuration based on the first offset.

In an example, the first offset in the LP WUS configuration is not greater than a maximum value of the first offset.

In an example, the first offset in the LP WUS configuration is not less than a minimum value of the first offset.

FIG. 6A is a schematic diagram illustrating an LP WUS configuration according to an embodiment of the disclosure. As shown in FIG. 6A, the LP WUS configuration includes: LP WUS period (period) + LP WUS sending/monitoring occasion (MO) length (lengthOfMO). In this case, a starting point of the period is aligned with a starting point of the LP WUS sending/monitoring occasion.

FIG. 6B is a schematic diagram illustrating an LP WUS configuration according to an embodiment of the disclosure. As shown in FIG. 6B, the LP WUS configuration includes: LP WUS period (period) + LP WUS sending/monitoring occasion length (lengthOfMO). In this case, an ending point of the period is aligned with an ending point of the LP WUS sending/monitoring occasion.

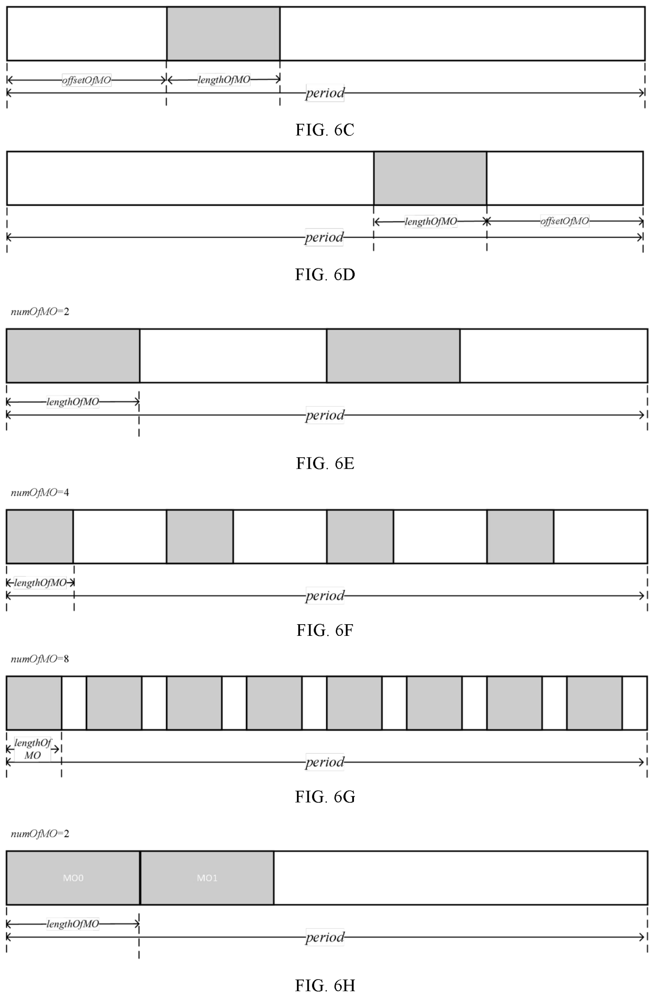

FIG. 6C is a schematic diagram illustrating an LP WUS configuration according to an embodiment of the disclosure. As shown in FIG. 6C, the LP WUS configuration includes: LP WUS period (period) + LP WUS sending/monitoring occasion offset (offsetOfMO) + LP WUS sending/monitoring occasion length (lengthOfMO), and a starting point of the period is offset backward by offsetOfMO to be a starting point of the LP WUS sending/monitoring occasion.

FIG. 6D is a schematic diagram illustrating an LP WUS configuration according to an embodiment of the disclosure. As shown in FIG. 6D, the LP WUS configuration includes: LP WUS period (period) + LP WUS sending/monitoring occasion offset (offsetOtMO)+ LP WUS sending/monitoring occasion length (lengthOfMO), and a starting point of the period is offset forward by offsetOfMO to be a starting point of the LP WUS sending/monitoring occasion.

FIG. 6E is a schematic diagram illustrating an LP WUS configuration according to an embodiment of the disclosure. As shown in FIG. 6E, the LP WUS configuration includes: LP WUS period (period) + numerical count of LP WUS sending/monitoring occasion within an LP WUS period (numOfMO) + LP WUS sending/monitoring occasion length (lengthOfMO), the period is divided equally by numOfMO, and a starting point of the LP WUS sending/monitoring occasion is aligned with a starting point of each portion. In this embodiment of the present disclosure, numOfMO=2.

FIG. 6F is a schematic diagram illustrating an LP WUS configuration according to an embodiment of the disclosure. As shown in FIG. 6F, the LP WUS configuration includes: LP WUS period (period) + numerical count of LP WUS sending/monitoring occasion within the LP WUS period (numOfMO) + LP WUS sending/monitoring occasion length (lengthOfMO), the period is divided equally by numOfMO, and a starting point of the LP WUS sending/monitoring occasion is aligned with a starting point of each portion. In this embodiment of the present disclosure, numOfMO=4.

FIG. 6G is a schematic diagram illustrating an LP WUS configuration according to an embodiment of the disclosure. As shown in FIG. 6G, the LP WUS configuration includes: LP WUS period (period) + numerical count of LP WUS sending/monitoring occasion within the LP WUS period (numOfMO) + LP WUS sending/monitoring occasion length (lengthOfMO), the period is divided equally by numOfMO, and a starting point of the LP WUS sending/monitoring occasion is aligned with a starting point of each portion. In this embodiment of the present disclosure, numOfMO=8.

FIG. 6H is a schematic diagram illustrating an LP WUS configuration according to an embodiment of the disclosure. As shown in FIG. 6H, the LP WUS configuration includes: LP WUS period (period) + numerical count of LP WUS sending/monitoring occasion within the LP WUS period (numOfMO) + LP WUS sending/monitoring occasion length (lengthOfMO), numOfMO sending/monitoring occasions are arranged consecutively, and a starting point of a first LP WUS sending/monitoring occasion is aligned with a starting point of the period. In this embodiment of the present disclosure, numOtMO=2.

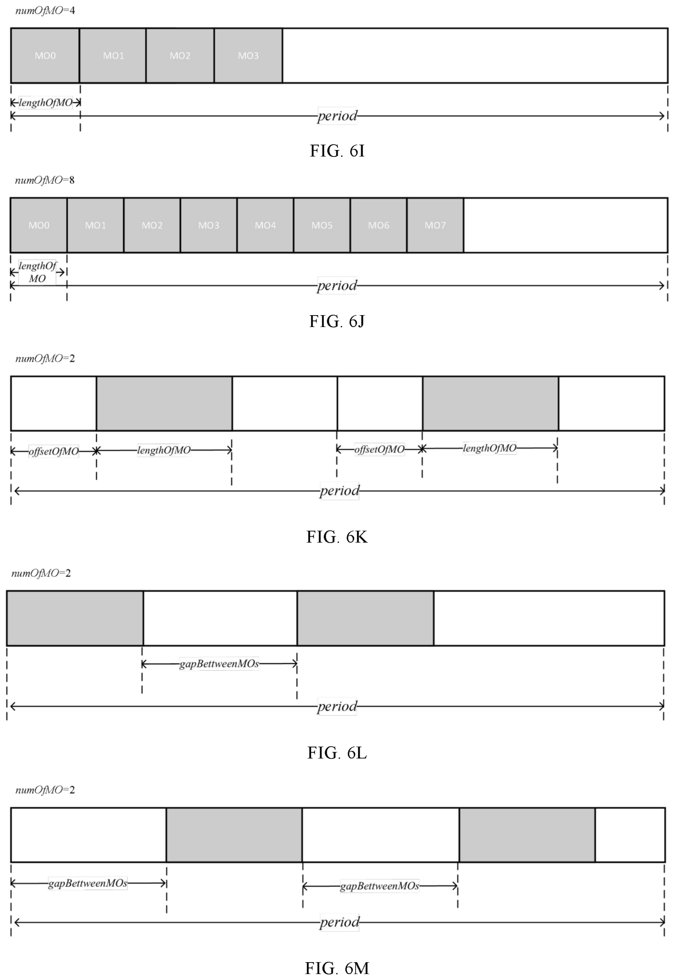

FIG. 6I is a schematic diagram illustrating an LP WUS configuration according to an embodiment of the disclosure. As shown in FIG. 6I, the LP WUS configuration includes: LP WUS period (period) + numerical count of LP WUS sending/monitoring occasion within the LP WUS period (numOfMO) + LP WUS sending/monitoring occasion length (lengthOfMO), numOfMO sending/monitoring occasions are arranged consecutively, and a starting point of a first LP WUS sending/monitoring occasion is aligned with a starting point of the period. In this embodiment of the present disclosure, numOtMO=4.

FIG. 6J is a schematic diagram illustrating an LP WUS configuration according to an embodiment of the disclosure. As shown in FIG. 6J, the LP WUS configuration includes: LP WUS period (period) + numerical count of LP WUS sending/monitoring occasion within the LP WUS period (numOfMO) + LP WUS sending/monitoring occasion length (lengthOfMO), numOfMO sending/monitoring occasions are arranged consecutively, and a starting point of a first LP WUS sending/monitoring occasion is aligned with a starting point of the period. In this embodiment of the present disclosure, numOtMO=8.

FIG. 6K is a schematic diagram illustrating an LP WUS configuration according to an embodiment of the disclosure. As shown in FIG. 6K, the LP WUS configuration includes: LP WUS period (period) + numerical count of LP WUS sending/monitoring occasion within the LP WUS period (numOfMO)+ LP WUS sending/monitoring occasion length (lengthOfMO) + the LP WUS sending/monitoring occasion offset (offsetOfMO), the period is divided equally by numOfMO, and a starting point of the LP WUS sending/monitoring occasion is aligned with the offset offsetOfMO of a starting point of each portion. This embodiment is an example of numOfMO=2.

FIG. 6L is a schematic diagram illustrating an LP WUS configuration according to an embodiment of the disclosure. As shown in FIG. 6L, the LP WUS configuration includes: LP WUS period (period) + numerical count of LP WUS sending/monitoring occasion within the LP WUS period (numOfMO) + LP WUS sending/monitoring occasion length (lengthOfMO) + gap between adjacent LP WUS sending/monitoring occasions within the LP WUS period (gapBettweenMOs), numOfMO sending/monitoring occasions are configured within the period, and an interval between adjacent sending/monitoring occasions is gapBettweenMOs. In an example, a starting point of the first LP WUS sending/monitoring occasion is aligned with a starting point of the period. This embodiment is an example of numOfMO=2 and the starting point of the first LP WUS sending/monitoring occasion being aligned with the starting point of the period.

FIG. 6M is a schematic diagram illustrating an LP WUS configuration according to an embodiment of the disclosure. As shown in FIG. 6M, the LP WUS configuration includes: LP WUS period (period) + numerical count of LP WUS sending/monitoring occasion within the LP WUS period (numOfMO) + LP WUS sending/monitoring occasion length (lengthOfMO) + gap between adjacent LP WUS sending/monitoring occasions within the LP WUS period (gapBettweenMOs), numOfMO sending/monitoring occasions are configured within the period, and an interval between adjacent sending/monitoring occasions is gapBettweenMOs. In an example, a starting point of the first LP WUS sending/monitoring occasion is aligned with a starting point of the period. This embodiment is an example of numOfMO=2 and an interval between the starting point of the first LP WUS sending/monitoring occasion and the starting point of the period being gapBettweenMOs.

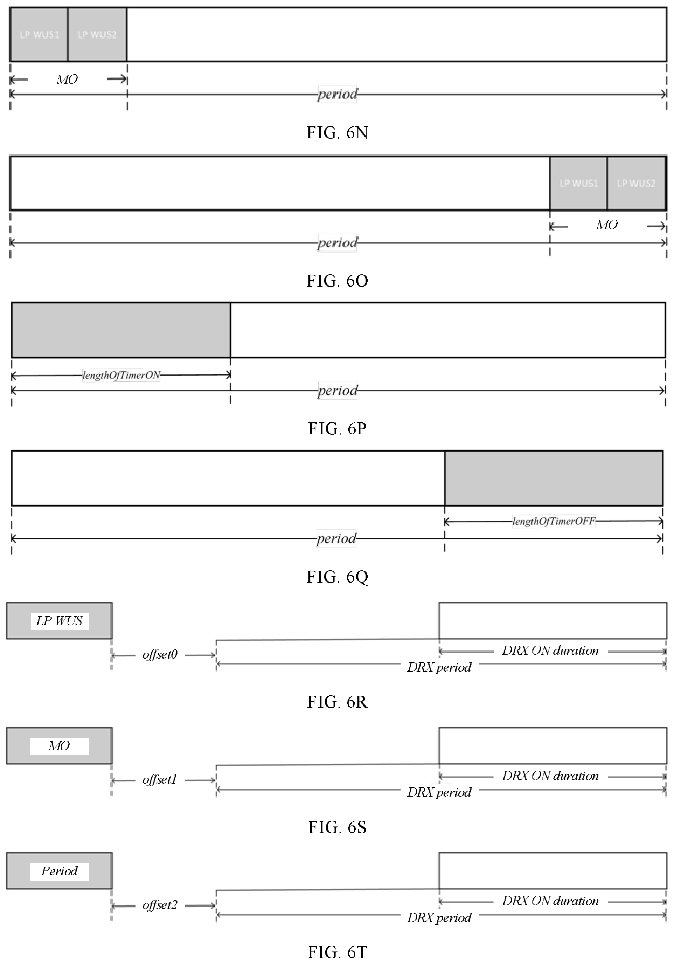

FIG. 6N is a schematic diagram illustrating an LP WUS configuration according to an embodiment of the disclosure. As shown in FIG. 6N, the LP WUS configuration includes: LP WUS period (period) + LP WUS sending length (lengthOfLPWUS) + numerical count of LP WUSs in the LP WUS sending/monitoring occasion (numOfLPWUSinMO). In this embodiment, a starting point of the period is aligned with a starting point of a first LP WUS.

FIG. 6O is a schematic diagram illustrating an LP WUS configuration according to an embodiment of the disclosure. As shown in FIG. 6O, the LP WUS configuration includes: LP WUS period (period) + LP WUS sending length (lengthOfLPWUS) + numerical count of LP WUSs in the LP WUS sending/monitoring occasion (numOfLPWUSinMO). In this embodiment, an ending point of the period is aligned with an ending point of a last LP WUS.

FIG. 6P is a schematic diagram illustrating an LP WUS configuration according to an embodiment of the disclosure. As shown in FIG. 6P, the LP WUS configuration includes: LP WUS period (period) + LP WUR on-timer length (lengthOfTimerON), the first lengthOfTimerON of the period turns on the ON timer.

FIG. 6Q is a schematic diagram illustrating an LP WUS configuration according to an embodiment of the disclosure. As shown in FIG. 6Q, the LP WUS configuration includes: LP WUS period (period) + LP WUR off-timer length (lengthOfTimerOFF), the first lengthOfTimerOFF of the period turns on the ON timer.

FIG. 6R is a schematic diagram illustrating an LP WUS configuration according to an embodiment of the disclosure. As shown in FIG. 6R, the LP WUS configuration includes: an offset length between time information of sending the LP WUS and time information of a DRX period (offset0) and/or a numerical count of LP WUSs in the LP WUS sending/monitoring occasion (numOfLPWUSinMO), and in this embodiment, numOfLPWUSinMO is equal to 1.

FIG. 6S is a schematic diagram illustrating an LP WUS configuration according to an embodiment of the disclosure. As shown in FIG. 6S, the LP WUS configuration includes: an offset length between time information of the LP WUS sending/monitoring occasion and time information of a DRX period (offset1) and/or a numerical count of LP WUS sending/monitoring occasions (numOfMO). In this embodiment of the present disclosure, numOfMO is equal to 1.

FIG. 6T is a schematic diagram illustrating an LP WUS configuration according to an embodiment of the disclosure. As shown in FIG. 6T, the LP WUS configuration includes: an offset length between time information of the LP WUS period and time information of a DRX period (offset2).

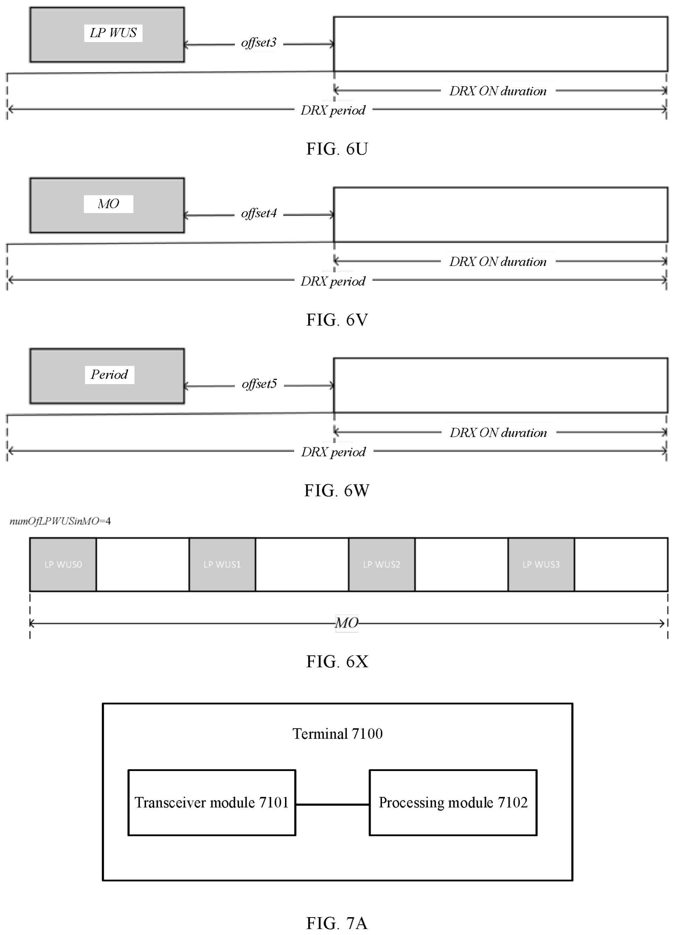

FIG. 6U is a schematic diagram illustrating an LP WUS configuration according to an embodiment of the disclosure. As shown in FIG. 6U, the LP WUS configuration includes: an offset length between time information of sending the LP WUS and time information of a DRX activation duration (offset3) and/or a numerical count of LP WUSs in the LP WUS sending/monitoring occasion (numOfLPWUSinMO), and in this embodiment, numOfLPWUSinMO is equal to 1.

FIG. 6V is a schematic diagram illustrating an LP WUS configuration according to an embodiment of the disclosure. As shown in FIG. 6V, the LP WUS configuration includes: an offset length between time information of the LP WUS sending/monitoring occasion and time information of a DRX activation duration (offset4) and/or a numerical count of LP WUS sending/monitoring occasions (numOfMO).

FIG. 6W is a schematic diagram illustrating an LP WUS configuration according to an embodiment of the disclosure. As shown in FIG. 6W, the LP WUS configuration includes: an offset length between time information of the LP WUS period and time information of a DRX activation duration (offset5).

In an example, the LP WUS configuration includes: an offset length between time information of sending the LP WUS and time information of a first signal (offset6) and/or a numerical count of LP WUSs in the LP WUS sending/monitoring occasion (numOfLPWUSinMO).

In an example, the LP WUS configuration includes: an offset length between time information of the LP WUS sending/monitoring occasion and time information of a first signal (offset7) and/or a numerical count of LP WUS sending/monitoring occasions (numOfMO).

In an example, the LP WUS configuration includes: an offset length between time information of the LP WUS period and time information of a first signal (offset8).

FIG. 6X is a schematic diagram illustrating an LP WUS configuration according to an embodiment of the disclosure. As shown in FIG. 6X, the LP WUS is configured in a sending/monitoring occasion, and the LP WUS configuration is determined according to at least one of parameters such as a numerical count of LP WUSs in the LP WUS sending/monitoring occasion, a gap between adjacent LP WUS sending/monitoring occasions within the LP WUS period, and an LP WUS sending length.

The communication method in the embodiments of the disclosure may include at least one of step S5101 to step S5106. For example, step S5101 may be implemented as an independent embodiment, step S5102 may be implemented as an independent embodiment, step S5105 may be implemented as an independent embodiment, step S5101 and step S5102 may be implemented as an independent embodiment, step S5103 and step S5104 may be implemented as an independent embodiment, step S5105 and step S5106 may be implemented as an independent embodiment, and step S5101, step S5102 and step S5103 may be implemented as an independent embodiment, which is not limited herein.

In some embodiments, step S5101 and step S5102 may be executed in an exchanged order or simultaneously. Step S5103 and step S5104 may be executed in an exchanged order or simultaneously.

In some embodiments, step S5103, step S5104 and step S5105 are optional, and one or more of the steps may be omitted or substituted in different embodiments.

In some embodiments, step S5101, step S5102 and step S5105 are optional, and one or more of the steps may be omitted or substituted in different embodiments.

In the embodiments of the disclosure, some or all steps and their optional implementations may be arbitrarily combined with some or all steps in other embodiments, and may also be arbitrarily combined with optional implementations of other embodiments.

The embodiments of the disclosure also provide an apparatus for implementing any one of the above methods. For example, an apparatus is provided, including units for performing the steps executed by the terminal in any one of the above methods. Furthermore, another apparatus is provided, including units or modules for performing the steps executed by the network device (e.g., an access network device, a core network functional node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7A is a block diagram illustrating a terminal according to an embodiment of the disclosure. The terminal may be the first terminal. As shown in FIG. 7A, the terminal 7100 may include at least one of: a transceiver module 7101, or a processing module 7102. In some embodiments, the transceiver module 7101 is configured to acquire an LP WUS configuration. In an example, the transceiver module is configured to perform at least one of the communication steps (e.g., step 2101, step 2103, step 2105, but is not limited herein) such as sending and/or receiving performed by the terminal 101 in any of the above methods, which is not repeated herein. In an example, the processing module is configured to perform at least one of other steps (e.g., step 2102, step 2104, but not limited herein) performed by the terminal 101 in any of the above methods, which is not repeated herein.

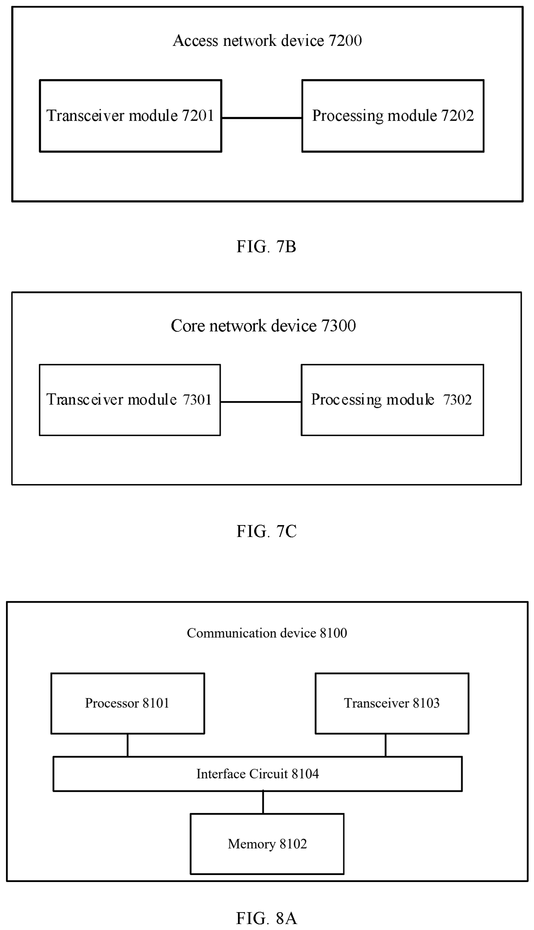

FIG. 7B is a block diagram illustrating an access network device according to an embodiment of the disclosure. As shown in FIG. 7B, the access network device 7200 may include at least one of: a transceiver module 7201, or a processing module 7202. In some embodiments, the transceiver module is configured to send an LP WUS configuration to a terminal, and send an LP WUS to the terminal. In an example, the transceiver module is configured to perform at least one of the communication steps (e.g., step 2101, step 2103, step 2105, but is not limited herein) such as sending and/or receiving performed by the terminal 101 in any of the above methods, which is not repeated herein. In an example, the processing module is configured to perform at least one of other steps (e.g., step 2102, step 2104, but not limited herein) performed by the terminal 101 in any of the above methods, which is not repeated herein.

FIG. 7C is a block diagram illustrating a core network device according to an embodiment of the disclosure. As shown in FIG. 7C, the core network device 7300 may include at least one of: a transceiver module 7301, or a processing module 7302. In some embodiments, the transceiver module is configured to configure a part or all of LP WUS configurations for a terminal. In an example, the transceiver module is configured to perform at least one of the communication steps (e.g., step 2101, step 2103, step 2105, but is not limited herein) such as sending and/or receiving performed by the terminal 101 in any of the above methods, which is not repeated herein. In an example, the processing module is configured to perform at least one of other steps (e.g., step 2102, step 2104, but not limited herein) performed by the terminal 101 in any of the above methods, which is not repeated herein.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules may respectively perform all or part of the steps required to be performed by the processing module. Optionally, the processing module may be interchangeable with a processor.

FIG. 8A is a block diagram of a communication device 8100 according to an embodiment of the disclosure. The communication device 8100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 8100 may be configured to implement the method in the above method embodiments. For details, reference may be made to the description in the above method embodiments.

As shown in FIG. 8A, the communication device 8100 may include one or more processors 8101. The processor 8100 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), execute a computer program, and process data of the computer program. The communication device 8100 is configured to execute any one of the above methods.

In some embodiments, the communication device 8100 may also include one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above method (e.g., step S2101, step S2103, but not limited herein), and the processor 8101 performs at least one of other steps (e.g., step S2102, step S2104, but not limited herein).

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 8100 further includes one or more interface circuits 8104. The interface circuit 8104 is connected to the memory 8102. The interface circuit 8104 may be configured to receive signals from the memory 8102 or other devices, and may be configured to send the signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the disclosure is not limited, and a structure of the communication device 8100 may not be limited by FIG. 8A. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

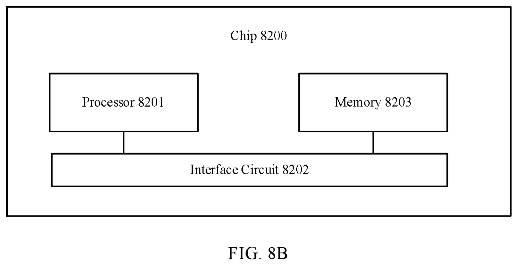

FIG. 8B is a block diagram of a chip 8200 according to an embodiment of the disclosure. For a case where the communication device 8100 may be a chip or a chip system, reference may be made to the block diagram of the chip 8200 shown in FIG. 8B, which it is not limited herein.

The chip 8200 includes one or more processors 8201. The chip 8200 is configured to execute any one of the above methods.

In some embodiments, the chip 8200 further includes one or more interface circuits 8202. The interface circuit 8202 is connected to a memory 8203. The interface circuit 8202 may be configured to receive signals from the memory 8203 or other devices, and may be configured to send the signals to the memory 8203 or other devices. For example, the interface circuit 8202 may read the instructions stored in the memory 8203 and send the instructions to the processor 8201.

In some embodiments, the interface circuit 8202 performs at least one of the communication steps such as sending and/or receiving in the above method (e.g., step S2101, step S2103, step S2105, but not limited herein), and the processor 8201 performs at least one of other steps (e.g., step S2102, step S2104, but not limited herein).

In some embodiments, terms such as interface circuit, interface, transceiver pin, transceiver, etc. may be used interchangeably.

In some embodiments, the chip 8200 further includes one or more memories 8203 for storing instructions. In an example, all or some of the memories 8203 may be located outside the chip 8200.

The disclosure also provides a storage medium for storing instructions. When the instructions are running on the communication device 8100, the communication device 8100 is caused to implement any one of the above methods. In an example, the above storage medium is an electronic storage medium. In an example, the above storage medium is a computer-readable storage medium, which is not limited herein. The above storage medium may also be a storage medium readable by other devices. In an example, the above storage medium may be a non-transitory storage medium, which is not limited to herein. The above storage medium may also be a transitory storage medium.

The disclosure also provides a program product. When the program product is executed by the communication device 8100, the communication device 8100 is caused to implement any one of the above methods. In an example, the above program product is a computer program product.

The disclosure also provides a computer program. When the computer program is running on a computer, the computer is caused to implement any one of the above methods.

## Claims

1. A communication processing method, performed by a terminal, comprising:
acquiring a low-power wake-up signal (LP WUS) configuration;
controlling a low-power wake-up receiver (LP WUR) of the terminal to receive at least one LP WUS based on the LP WUS configuration, and determining an operation state of main radio (MR) of the terminal based on the at least one LP WUS.

2. The method according to claim 1, wherein acquiring the LP WUS configuration comprises:
receiving a configuration signal sent from a network device, and determining the LP WUS configuration based on the configuration signal; or
acquiring a part or all of LP WUS configurations configured by a network device.

3. The method according to claim 2, wherein the configuration signal comprises at least one of:
a radio resource control (RRC) signaling;
a media-access-control control element (MAC CE); or
a dynamic indication signaling.

4. The method according to any one of claims 1 to 3, wherein the LP WUS configuration comprises at least one of:
an LP WUS period;
an LP WUS period offset, wherein the LP WUS period offset is one or more of: a radio frame offset of an LP WUS period, a slot offset of an LP WUS period, or a time domain symbol offset of an LP WUS period;
an LP WUS period length, wherein the LP WUS period length is a time domain length of an LP WUS period;
a numerical count of LP WUS sending/monitoring occasions within an LP WUS period;
a maximum numerical count and/or a minimum numerical count of LP WUS sending/monitoring occasions within an LP WUS period;
a gap between adjacent LP WUS sending/monitoring occasions within an LP WUS period, wherein the gap between adjacent LP WUS sending/monitoring occasions comprises a time domain gap and/or a frequency domain gap;
an LP WUS sending/monitoring occasion;
an LP WUS sending/monitoring occasion length;
an LP WUS sending/monitoring occasion offset;
a gap between adjacent LP WUSs within an LP WUS sending/monitoring occasion, wherein the gap between adjacent LP WUSs comprises a time domain gap and/or a frequency domain gap;
a numerical count of LP WUSs in an LP WUS sending/monitoring occasion;
a maximum numerical count of LP WUSs in an LP WUS sending/monitoring occasion;
a minimum numerical count of LP WUSs in an LP WUS sending/monitoring occasion;
a sending buffer size;
a cycle buffer size;
an LP WUS sending length;
a numerical count of LP WUSs consecutively sent;
a maximum numerical count of LP WUSs consecutively sent;
a minimum numerical count of LP WUSs consecutively sent;
a LP WUR on-timer length;
a LP WUR off-timer length;
an offset length between time information of sending an LP WUS and time information of a discontinuous reception (DRX) period;
an offset length between time information of sending an LP WUS and time information of a DRX activation duration;
an offset length between time information of sending an LP WUS and time information of a DRX inactivation duration;
an offset length between time information of sending an LP WUS and time information of a first signal;
an offset length between time information of an LP WUS sending/monitoring occasion and time information of a DRX period;
an offset length between time information of an LP WUS sending/monitoring occasion and time information of a DRX activation duration;
an offset length between time information of an LP WUS sending/monitoring occasion and time information of a DRX inactivation duration;
an offset length between time information of an LP WUS sending/monitoring occasion and time information of a first signal;
an offset length between time information of an LP WUS period and time information of a DRX period;
an offset length between time information of an LP WUS period and time information of a DRX activation duration;
an offset length between time information of an LP WUS period and time information of a DRX inactivation duration; or
an offset length between time information of an LP WUS period and time information of a first signal.

5. The method according to claim 4, wherein the first signal comprises at least one of: downlink control information (DCI) with cyclic redundancy check (CRC) scrambled by power saving-radio network temporary identity (PS-RNTI) (DCP), a paging early indication (PEI); or a WUS.

6. The method according to claim 4, wherein the time information comprises at least one of: a starting point, an ending point, a starting point at m/2n, or an ending point at m/2n,
wherein m and n are positive integers, the starting point comprises a first time domain symbol, a first slot, a first radio frame or a first sub-radio frame of a time domain resource corresponding to a channel/signal, and the ending point comprises a last time domain symbol, a last slot, a last radio frame or a last sub-radio frame of the time domain resource corresponding to the channel/signal.

7. The method according to any one of claims 1 to 6, wherein controlling the LP WUR of the terminal to receive the at least one LP WUS based on the LP WUS configuration comprises at least one of:
turning on the LP WUR at an LP WUS sending/monitoring occasion;
determining a start time of the LP WUR based on a sending buffer size, an LP WUS sending/ monitoring occasion and the sending buffer size;
determining a start time of the LP WUR based on an LP WUS sending/ monitoring occasion and a sending buffer size;
determining a start time of the LP WUR based on a sending buffer size and an LP WUS sending/ monitoring occasion;
turning on the LP WUR during a LP WUR on-timer length; or
turning off the LP WUR during a LP WUR off-timer length.

8. The method according to any one of claims 1 to 6, wherein adjusting the operation state of the MR based on the at least one LP WUS comprises at least one of:
in a case where the at least one LP WUS does not indicate to wake up, turning off the MR in a subsequent DRX on duration;
in a case where the at least one LP WUS does not indicate to wake up, turning off the MR in a subsequent duration;
in a case where the at least one LP WUS indicates to wake up, turning on the MR; or
in a case where the at least one LP WUS does not indicate to wake up, not monitoring a first signal.

9. The method according to any one of claims 1 to 6, further comprising at least one of:
in a case where the at least one LP WUS is not received, not turning on the MR in a subsequent DRX on duration;
in a case where the at least one LP WUS is not received, turning off the MR in a subsequent duration; or
in a case where the at least one LP WUS is not received, not monitoring a first signal.

10. The method according to claim 1, further comprising:
reporting a terminal capability to a network device.

11. The method according to claim 10, wherein the terminal capability comprises a minimum value or a maximum value of a first offset.

12. The method according to claim 11, wherein the first offset comprises at least one of:
an LP WUS period offset;
an LP WUS sending/monitoring occasion offset;
an offset between time information of sending an LP WUS and time information of a DRX period;
an offset between time information of sending an LP WUS and time information of a DRX activation duration;
an offset between time information of sending an LP WUS and time information of a DRX inactivation duration;
an offset between time information of sending an LP WUS and time information of a first signal;
an offset between time information of an LP WUS sending/monitoring occasion and time information of a DRX period;
an offset between time information of an LP WUS sending/monitoring occasion and time information of a DRX activation duration;
an offset between time information of an LP WUS sending/monitoring occasion and time information of a DRX inactivation duration;
an offset between time information of an LP WUS sending/monitoring occasion and time information of a first signal;
an offset between time information of an LP WUS period and time information of a DRX period;
an offset between time information of an LP WUS period and time information of a DRX activation duration;
an offset between time information of an LP WUS period and time information of a DRX inactivation duration; or
an offset between time information of an LP WUS period and time information of a first signal.

13. A communication processing method, performed by a network device, comprising:
sending a low-power wake-up signal (LP WUS) configuration to a terminal; and
sending an LP WUS to the terminal.

14. The method according to claim 13, wherein the LP WUS configuration comprises:
sending a configuration signal to the terminal, wherein the configuration signal comprises the LP WUS configuration.

15. The method according to claim 14, wherein the configuration signal comprises at least one of:
a radio resource control (RRC) signaling;
a media-access-control control element (MAC CE); or
a dynamic indication signaling.

16. The method according to any one of claims 13 to 15, wherein the LP WUS configuration comprises at least one of:
an LP WUS period;
an LP WUS period offset, wherein the LP WUS period offset is one or more of: a radio frame offset of an LP WUS period, a slot offset of an LP WUS period, or a time domain symbol offset of an LP WUS period;
an LP WUS period length, wherein the LP WUS period length is a time domain length of an LP WUS period;
a numerical count of LP WUS sending/monitoring occasions within an LP WUS period;
a maximum numerical count and/or a minimum numerical count of LP WUS sending/monitoring occasions within an LP WUS period;
a gap between adjacent LP WUS sending/monitoring occasions within an LP WUS period, wherein the gap between adjacent LP WUS sending/monitoring occasions comprises a time domain gap and/or a frequency domain gap;
an LP WUS sending/monitoring occasion;
an LP WUS sending/monitoring occasion length;
an LP WUS sending/monitoring occasion offset;
a gap between adjacent LP WUSs within an LP WUS sending /monitoring occasion, wherein the gap between adjacent LP WUSs comprises a time domain gap and/or a frequency domain gap;
a numerical count of LP WUSs in an LP WUS sending/monitoring occasion;
a maximum numerical count of LP WUSs in an LP WUS sending/monitoring occasion;
a minimum numerical count of LP WUSs in an LP WUS sending/monitoring occasion;
a sending buffer size;
a cycle buffer size;
an LP WUS sending length;
a numerical count of LP WUSs consecutively sent;
a maximum numerical count of LP WUSs consecutively sent;
a minimum numerical count of LP WUSs consecutively sent;
a LP WUR on-timer length;
a LP WUR off-timer length;
an offset length between time information of sending an LP WUS and time information of a discontinuous reception (DRX) period;
an offset length between time information of sending an LP WUS and time information of a DRX activation duration;
an offset length between time information of sending an LP WUS and time information of a DRX inactivation duration;
an offset length between time information of sending an LP WUS and time information of a first signal;
an offset length between time information of an LP WUS sending/monitoring occasion and time information of a DRX period;
an offset length between time information of an LP WUS sending/monitoring occasion and time information of a DRX activation duration;
an offset length between time information of an LP WUS sending/monitoring occasion and time information of a DRX inactivation duration;
an offset length between time information of an LP WUS sending/monitoring occasion and time information of a first signal;
an offset length between time information of an LP WUS period and time information of a DRX period;
an offset length between time information of an LP WUS period and time information of a DRX activation duration;
an offset length between time information of an LP WUS period and time information of a DRX inactivation duration; or
an offset length between time information of an LP WUS period and time information of a first signal.

17. The method according to claim 16, wherein the first signal comprises at least one of: downlink control information (DCI) with cyclic redundancy check (CRC) scrambled by power saving-radio network temporary identity (PS-RNTI) (DCP), a paging early indication (PEI); or a WUS.

18. The method according to claim 16, wherein the time information comprises at least one of: a starting point, an ending point, a starting point at m/2n, or an ending point at m/2n;
wherein m and n are positive integers, the starting point comprises a first time domain symbol, a first slot, a first radio frame or a first sub-radio frame of a time domain resource corresponding to a channel/signal, and the ending point comprises a last time domain symbol, a last slot, a last radio frame or a last sub-radio frame of the time domain resource corresponding to the channel/signal.

19. The method according to claim 13, further comprising:
receiving a terminal capability reported by the terminal;
determining the LP WUS configuration according to the terminal capability.

20. The method according to claim 19, wherein the terminal capability comprises a minimum value or a maximum value of a first offset.

21. The method according to claim 20, wherein the first offset comprises at least one of:
an LP WUS period offset;
an LP WUS sending/monitoring occasion offset;
an offset between time information of sending an LP WUS and time information of a DRX period;
an offset between time information of sending an LP WUS and time information of a DRX activation duration;
an offset between time information of sending an LP WUS and time information of a DRX inactivation duration;
an offset between time information of sending an LP WUS and time information of a first signal;
an offset between time information of an LP WUS sending/monitoring occasion and time information of a DRX period;
an offset between time information of an LP WUS sending/monitoring occasion and time information of a DRX activation duration;
an offset between time information of an LP WUS sending/monitoring occasion and time information of a DRX inactivation duration;
an offset between time information of an LP WUS sending/monitoring occasion and time information of a first signal;
an offset between time information of an LP WUS period and time information of a DRX period;
an offset between time information of an LP WUS period and time information of a DRX activation duration;
an offset between time information of an LP WUS period and time information of a DRX inactivation duration; or
an offset between time information of an LP WUS period and time information of a first signal.

22. The method according to claim 20 or 21, wherein the first offset in the LP WUS configuration is not greater than the maximum value of the first offset, or the first offset in the LP WUS configuration is not less than the minimum value of the first offset.

23. The method according to any one of claims 13 to 22, wherein the network device is an access network device, or a core network device.

24. A communication processing method, comprising:
sending, by a network device, a low-power wake-up signal (LP WUS) configuration to a terminal;
acquiring, by the terminal, the LP WUS configuration;
sending, by the network device, at least one LP WUS to the terminal;
controlling, by the terminal, a low-power wake-up receiver (LP WUR) to receive the at least one LP WUS based on the LP WUS configuration, and adjusting, by the terminal, an operation state of main radio (MR) of the terminal based on the at least one LP WUS.

25. A terminal, comprising:
a transceiver module, configured to acquire a low-power wake-up signal (LP WUS) configuration; and
a processing module, configured to control a low-power wake-up receiver (LP WUR) to receive at least one LP WUS based on the LP WUS configuration, and determine an operation state of main radio (MR) based on the at least one LP WUS.

26. A network device, comprising:
a transceiver module, configured to send a low-power wake-up signal (LP WUS) configuration to a terminal; and
a processing module, configured to send an LP WUS to the terminal.

27. A terminal, comprising:
one or more processors;
wherein the terminal is configured to perform the method according to any one of claims 1 to 12.

28. An access network device, comprising:
one or more processors;
wherein the access network device is configured to perform the method according to any one of claims 13 to 21.

29. A communication system, comprising a terminal and a network device, wherein the terminal is configured to implement the method according to any one of claims 1 to 12, and the network device is configured to implement the method according to any one of claims 13 to 23.

30. A storage medium storing instructions that, when running on a communication device, cause the communication device to perform the method according to any one of claims 1 to 12 or the method according to any one of claims 13 to 23.
